# EUROPEAN PATENT APPLICATION

(11) **EP 2 369 398 A1**
(43) Date of publication of application: **28.09.2011**
(21) Application number: 11158030.4
(22) Date of filing: 14.03.2011
(51) Int. Cl.: G02B 26/00, G02B 6/293

(54) **Light filter and analytical instrument and optical equipment using the same**

(30) Priority: 16.03.2010 JP 2010059546
(71) Applicant: Seiko Epson Corporation, Shinjuku-ku Tokyo (JP)
(72) Inventor: Matsushita, Tomonori, Nagano 392-8502 (JP)
(74) Representative: HOFFMANN EITLE

(57) **Abstract**

A light filter has a first reflecting film and a second reflecting film opposed to each other, a first electrode, a second electrode, a third electrode, a fourth electrode, and a potential difference control unit, the first electrode and the third electrode are opposed at a first distance, the second electrode and the fourth electrode are opposed at a second distance different from the first distance, the potential difference control unit brings the first electrode and the third electrode into contact by producing a potential difference between the first electrode and the third electrode and brings the second electrode and the fourth electrode into contact by producing a potential difference between the second electrode and the fourth electrode, and thereby, a gap between the first reflecting film and the second reflecting film may be controlled with high accuracy.

## Description

### BACKGROUND

### 1. Technical Field

The present invention relates to a light filter, an analytical instrument, optical equipment, etc. using the light filter.

### 2. Related Art

An interference filter that makes a transmission wavelength tunable has been proposed (Patent Document 1 (JP-A-11-142752)). As shown in Fig. 1 of Patent Document 1, the filter includes a pair of substrates held in parallel to each other and a pair of multilayer films (reflecting films) formed to face each other and have a gap of a fixed distance on the pair of substrates. The light entering between the pair of multilayer films is multiply-reflected on the same principle as that of a Fabry-Perot interferometer, the lights other than that in a specific wavelength band are cancelled out by interferences, and only the light in the specific wavelength band is transmitted. That is, the interference filter of this type functions as a band-pass filter and is referred to as "etalon".

Here, when the size of the gap between the pair of multilayer films (reflecting films) is changed by an external force, a wavelength in response to the size of the gap may selectively be transmitted. Accordingly, a transmission wavelength-tunable interference filter that can tune the transmission wavelength is formed.

In Patent Document 1, as shown in Fig. 4, a pair of electrostatic drive electrodes as electrostatic actuators is further provided on the pair of multilayer films (reflecting films) formed on the pair of substrates. By applying a voltage to the pair of electrostatic drive electrodes, the size of the gap between the pair of multilayer films is made variable.

A task of the wavelength-tunable interference filter is to perform control of the gap with accuracy. However, in the patent document, the size of the gap between the pair of multilayer films is made variable by applying a voltage to the pair of electrostatic drive electrodes, and thus, it is not easy to perform accurate gap control because of the fluctuation of the drive voltage due to noise or the like.

### SUMMARY

An advantage of some aspects of the invention is to provide a light filter that can perform gap control between reflecting films with higher accuracy, and an analytical instrument and optical equipment using the light filter.

(1) A light filter according to an aspect of the invention includes a first substrate, a second substrate opposed to the first substrate, a first reflecting film provided on the first substrate, a second reflecting film provided on the second substrate and opposed to the first reflecting film, a second electrode provided on the first substrate and provided between the first electrode and the first reflecting film in a plan view, the second electrode provided on the first substrate and provided around the first electrode in the plan view, a third electrode provided on the second substrate and opposed to the first electrode, a fourth electrode provided on the second substrate and opposed to the second electrode, and a potential difference control unit that controls a potential difference between the first electrode and the third electrode and a potential difference between the second electrode and the fourth electrode, wherein the first electrode and the third electrode are opposed at a first distance, the second electrode and the fourth electrode are opposed at a second distance different from the first distance, and the potential difference control unit brings the first electrode and the third electrode into contact by producing the potential difference between the first electrode and the third electrode and brings the second electrode and the fourth electrode into contact by producing the potential difference between the second electrode and the fourth electrode.

According to the aspect of the invention, the potential difference control unit includes bringing the first electrode and the third electrode into contact by producing the potential difference between the first electrode and the third electrode and bringing the second electrode and the fourth electrode into contact by producing the potential difference between the second electrode and the fourth electrode. By bringing the first electrode and the third electrode into contact and bringing the second electrode and the fourth electrode into contact, even when there is disturbance of voltage fluctuation or the like, a gap between the first reflecting film and the second reflecting film is difficult to vary, and thus, the gap control may be performed with high accuracy.

(2) The light filter according to the aspect of the invention may be configured such that the potential, difference control unit brings the second electrode and the fourth electrode into contact after bringing the first electrode and the third electrode into contact.

Thereby, a gap between reflecting films corresponding to the contact between the first electrode and the third electrode and a gap between reflecting films corresponding to the contact between the second electrode and the fourth electrode may be secured.

(3) The light filter according to the aspect of the invention may be configured such that the potential difference control unit brings the first electrode and the third electrode into contact by setting the potential difference between the first electrode and the third electrode to a first potential difference, and then, setting the potential difference between the first electrode and the third electrode to a potential difference larger than the first potential difference.

Thereby, the gap between reflecting films may be secured at more levels.

(4) The light filter according to the aspect of the invention may be configured such that the potential difference control unit brings the second electrode and the fourth electrode into contact by setting the potential difference between the second electrode and the fourth electrode to a second potential difference, and then, setting the potential difference between the second electrode and the fourth electrode to a potential difference larger than the second potential difference.

Thereby, the gap between reflecting films may be secured at more levels.

(5) A light filter according to another aspect of the invention includes a first substrate, a second substrate opposed to the first substrate, a first reflecting film provided on the first substrate, a second reflecting film provided on the second substrate and opposed to the first reflecting film, a first electrode provided on the first substrate and provided around the first reflecting film in a plan view, a second electrode provided on the first substrate and provided between the first electrode and the first reflecting film in the plan view, a third electrode provided on the second substrate and opposed to the first electrode, a fourth electrode provided on the second substrate and opposed to the second electrode, a first insulating film provided on the first electrode, a second insulating film provided on the second electrode, and a potential difference control unit that controls a potential difference between the first electrode and the third electrode and a potential difference between the second electrode and the fourth electrode, wherein the first electrode and the third electrode are opposed at a first distance, the second electrode and the fourth electrode are opposed at a second distance different from the first distance, and the potential difference control unit brings the first insulating film and the third electrode into contact by producing the potential difference between the first electrode and the third electrode and brings the second insulating film and the fourth electrode into contact by producing the potential difference between the second electrode and the fourth electrode.

According to the aspect of the invention, the potential difference control unit includes bringing the first insulating film and the third electrode into contact by producing the potential difference between the first electrode and the third electrode and bringing the second insulating film and the fourth electrode into contact by producing the potential difference between the second electrode and the fourth electrode. By bringing the first insulating film and the third electrode into contact and bringing the second insulating film and the fourth electrode into contact, even when there is disturbance of voltage fluctuation or the like, a gap between the first reflecting film and the second reflecting film is difficult to vary, and thus, the gap control between the reflecting films may be performed with high accuracy.

(6) The light filter according to the aspect of the invention may be configured such that the potential difference control unit brings the second insulating film and the fourth electrode into contact after bringing the first insulating film and the third electrode into contact.

Thereby, a gap between reflecting films corresponding to the contact between the first insulating film and the third electrode and a gap between reflecting films corresponding to the contact between the second insulating film and the fourth electrode may be secured.

(7) The light filter according to the aspect of the invention may be configured such that the potential difference control unit brings the first insulating film and the third electrode into contact by setting the potential difference between the first electrode and the third electrode to a first potential difference, and then, setting the potential difference between the first electrode and the third electrode to a potential difference larger than the first potential difference.

Thereby, the gap between reflecting films may be secured at more levels.

(8) The light filter according to the aspect of the invention may be configured such that the potential difference control unit brings the second insulating film and the fourth electrode into contact by setting the potential difference between the second electrode and the fourth electrode to a second potential difference, and then, setting the potential difference between the second electrode and the fourth electrode to a potential difference larger than the second potential difference.

Thereby, the gap between reflecting films may be secured at more levels.

(9) A light filter according to still another aspect of the invention includes a first substrate, a second substrate opposed to the first substrate, a first reflecting film provided on the first substrate, a second reflecting film provided on the second substrate and opposed to the first reflecting film, a first electrode provided on the first substrate and provided around the first reflecting film in a plan view, a second electrode provided on the first substrate and provided between the first electrode and the first reflecting film in the plan view, a third electrode provided on the second substrate and opposed to the first electrode, a fourth electrode provided on the second substrate and opposed to the second electrode, a first insulating film provided on the first electrode, a second insulating film provided on the second electrode, a third insulating film provided on the third electrode, a fourth insulating film provided on the fourth electrode, and a potential difference control unit that controls a potential difference between the first electrode and the third electrode and a potential difference between the second electrode and the fourth electrode, wherein the first electrode and the third electrode are opposed at a first distance, the second electrode and the fourth electrode are opposed at a second distance different from the first distance, and the potential difference control unit brings the first insulating film and the third insulating film into contact by producing the potential difference between the first electrode and the third electrode and brings the second insulating film and the fourth insulating film into contact by producing the potential difference between the second electrode and the fourth electrode.

According to the aspect of the invention, the potential difference control unit includes bringing the first insulating film and the third insulating film into contact by producing the potential difference between the first electrode and the third electrode and bringing the second insulating film and the fourth insulating film into contact by producing the potential difference between the second electrode and the fourth electrode. By bringing the first insulating film and the third insulating film into contact and bringing the second insulating film and the fourth insulating film into contact, even when there is disturbance of voltage fluctuation or the like, a gap between the first reflecting film and the second reflecting film is difficult to vary, and thus, the gap control between the reflecting films may be performed with high accuracy.

(10) The light filter according to the aspect of the invention may be configured such that the potential difference control unit brings the second insulating film and the fourth insulating film into contact after bringing the first insulating film and the third insulating film into contact.

Thereby, a gap between reflecting films corresponding to the contact between the first insulating film and the third insulating film and a gap between reflecting films corresponding to the contact between the second insulating film and the fourth insulating film may be secured.

(11) The light filter according to the aspect of the invention may be configured such that the potential difference control unit brings the first insulating film and the third insulating film into contact by setting the potential difference between the first electrode and the third electrode to a first potential difference, and then, setting the potential difference between the first electrode and the third electrode to a potential difference larger than the first potential difference.

Thereby, the gap between reflecting films may be secured at more levels.

(12) The light filter according to the aspect of the invention may be configured such that the potential difference control unit brings the second insulating film and the fourth insulating film into contact by setting the potential difference between the second electrode and the fourth electrode to a second potential difference, and then, setting the potential difference between the second electrode and the fourth electrode to a potential difference larger than the second potential difference.

Thereby, the gap between reflecting films may be secured at more levels.

(13) The light filter according to the aspect of the invention may be configured such that the first distance is a distance when the potential difference between the first electrode and the third electrode is zero, and the second distance is a distance when the potential difference between the second electrode and the fourth electrode is zero.

(14) The light filter according to the aspect of the invention may be configured such that, given that a surface of the first electrode at a second substrate side is a first surface, a surface of the second electrode at the second substrate side is a second surface, a surface of the third electrode at a first substrate side is a third surface, and a surface of the fourth electrode at the first substrate side is a fourth surface, the first distance is a distance from the first surface to the third surface in a perpendicular direction of the first surface, and the second distance is a distance from the second surface to the fourth surface in a perpendicular direction of the second surface.

(15) The light filter according to the aspect of the invention may be configured such that, when the potential difference between the first electrode and the third electrode is zero and the potential difference between the second electrode and the fourth electrode is zero, the first reflecting film and the second reflecting film are opposed at a third distance, the first distance is smaller than the second distance, and the second distance is smaller than the third distance.

(16) The light filter according to the aspect of the invention may be configured such that, given that a surface of the first reflecting film at the second substrate side is a first reflecting film surface, and a surface of the second reflecting film at the first substrate side is a second reflecting film surface, the third distance is a distance from the first reflecting film surface to the second reflecting film surface in a perpendicular direction of the first reflecting film surface.

(17) The light filter according to the aspect of the invention may be configured such that, the first substrate has a first surface, a second surface higher than the first surface, and a third surface higher than the second surface at the second substrate side, the first reflecting film is formed on the first surface, the second electrode is formed on the second surface, and the first electrode is formed on the third surface.

(18) The light filter according to the aspect of the invention may be configured such that, the first substrate has a first surface, a second surface having the same height as that of the first surface, and a third surface having the same height as that of the second surface at the second substrate side, the first reflecting film is formed on the first surface, the second electrode is formed on the second surface, the first electrode is formed on the third surface, and a thickness of the first electrode is different from a thickness of the second electrode.

(19) The light filter according to the aspect of the invention may be configured to further includes an extraction wire connected to a first electrode, wherein the first electrode has a first ring shape in the plan view, the second electrode has a second ring shape with a slit in the plan view, the third electrode has a third ring shape in the plan view, the fourth electrode has a fourth ring shape with a slit in the plan view, a part of the extraction wire connected to the first electrode is formed in a region in which the slit of the second ring shape is formed, and the slit of the fourth ring shape is formed above the slit of the second ring shape.

According to the aspect of the invention, a part of the extraction wire connected to the first electrode is formed in the region in which the slit of the second ring shape is formed, and the slit of the fourth ring shape is formed above the slit of the second ring shape. That is, the fourth ring shape is not formed above the part of the extraction wire. Thereby, even when a voltage is applied to the extraction wire, generation of unwanted electrostatic attractive force acting between the extraction wire and the fourth electrode may be suppressed.

(20) The light filter according to the aspect of the invention may be configured such that the first electrode and the second electrode are formed apart, and the third electrode and the fourth electrode are electrically connected via a connecting part.

Thereby, the third electrode and the fourth electrode may be formed as a common electrode and the layout of the wiring formed on the second substrate (the third electrode, the fourth electrode, and the extraction wire) may be simplified.

(21) An analytical instrument according to yet another aspect of the invention includes the above described light filter.

(22) Optical equipment according to still yet another aspect of the invention includes the above described light filter.

### BRIEF DESCRIPTION OF THE DRAWINGS

The invention will be described with reference to the accompanying drawings, wherein like numbers reference like elements.

Fig. 1 is a sectional view showing a voltage non-application state of a light filter as one embodiment of the invention.

Fig. 2 is a sectional view showing an example of a voltage application state of the light filter shown in Fig. 1.

Fig. 3 is a sectional view showing another example of the voltage application state than that in Fig. 2 of the light filter shown in Fig. 1.

Fig. 4A is a plan view of a first electrode, and Fig. 4B is a plan view of a second electrode.

Fig. 5 is a sectional view showing insulating films formed on surfaces of a pair of opposed electrodes.

Figs. 6A and 6B are plan views showing overlapping states of the first and second electrodes seen from a second substrate side.

Fig. 7 is a plan view showing a wiring layout of first to fourth extraction wires seen from the second substrate side through the second substrate.

Fig. 8 is a block diagram of an application voltage control system of the light filter.

Fig. 9 is a block diagram of another application voltage control system of the light filter.

Fig. 10 is a characteristic table showing an example of voltage table data.

Fig. 11 is a characteristic graph showing relationships between gaps between first and second reflecting films and transmission peak wavelengths of the light filter.

Fig. 12 is a characteristic table showing another example of voltage table data.

Fig. 13 is a characteristic table showing yet another example of voltage table data.

Fig. 14 is a characteristic graph showing a relationship between a potential difference and an electrostatic attractive force between the first and second electrodes.

Fig. 15 is a characteristic graph showing a relationship between an electrostatic attractive force and a gap between electrodes.

Fig. 16 is a characteristic table showing yet another example of voltage table data.

Fig. 17 is a block diagram of an analytical instrument as another embodiment of the invention.

Fig. 18 is a flowchart showing a spectroscopic measurement operation in the instrument shown in Fig. 17.

Fig. 19 is a block diagram of optical equipment as still another embodiment of the invention.

### DESCRIPTION OF EXEMPLARY EMBODIMENTS

Hereinafter, preferred embodiments of the invention will be explained in detail. Note that the embodiments described as below do not unduly limit the subject matter of the invention described in claims, and all of the configurations explained in the embodiments are not necessarily essential as solving means of the invention.

### 1. Light Filter

### 1.1. Filter Unit of Light Filter

### 1.1.1. Outline of Filter Unit

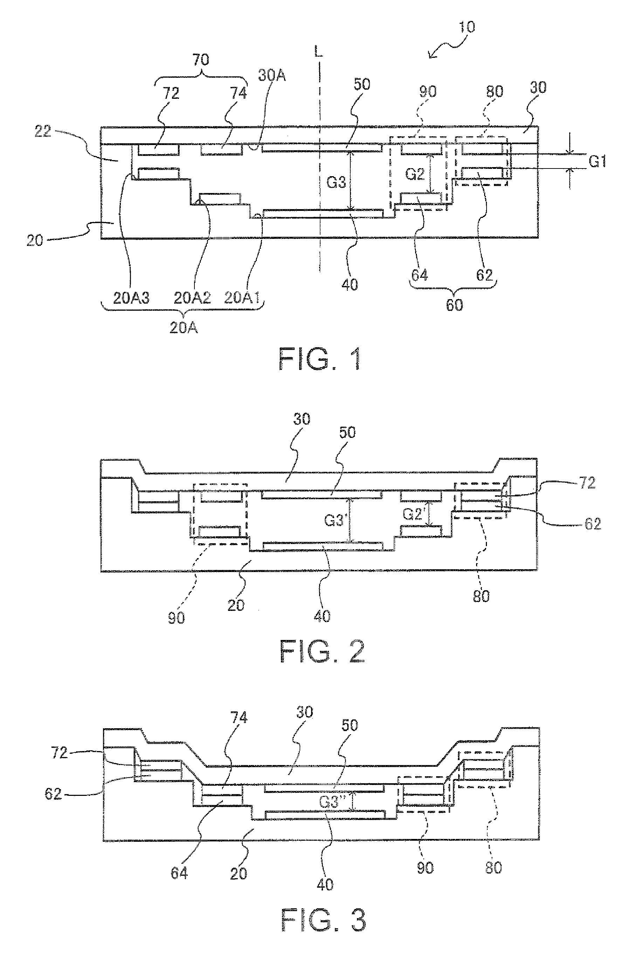

Fig. 1 is a sectional view showing a voltage non-application state (initial state) of a light filter 10 of the embodiment, and Figs. 2 and 3 are sectional views of voltage application states (driving states). The light filter 10 shown in Figs. 1 to 3 includes a first substrate 20, and a second substrate 30 opposed to the first substrate 20. In the embodiment, the first substrate 20 is a fixed substrate and the second substrate 30 is a movable substrate or a diaphragm, and either or both of them may be made movable.

In the embodiment, a support part 22 that is integrated with the first substrate 20, for example, and movably supports the second substrate 30 is formed. The support part 22 may be formed on the second substrate 30, or formed separately from the first and second substrates 20, 30.

The first and second substrates 20, 30 are respectively formed using various glass of soda glass, crystalline glass, quartz glass, lead glass, potassium glass, borosilicate glass, alkali-free glass, etc. or quartz or the like, for example. Among them, as constituent materials of the respective substrates 20, 30, for example, glass containing an alkali metal such as sodium (Na) or potassium (K) is preferable. By forming the respective substrates 20, 30 using such glass, the adhesion of reflecting films 40, 50 and respective electrodes 60, 70, which will be described later and bonding strength between the substrates may be improved. Further, these two substrates 20, 30 are bonded by surface activated bonding or the like using a plasma-polymerized film, for example, and integrated. Each of the first and second substrates 20, 30 is formed in a square, 10 mm on a side, and the maximum diameter of the part functioning as a diaphragm is 5 mm, for example.

The first substrate 20 is formed by processing a glass base material formed to have a thickness of 500 µm, for example, by etching. In the first substrate 20, the first reflecting film 40 having a circular shape, for example, is formed on a first opposed surface 20A1 at the center of an opposed surface 20A opposed to the second substrate 30. Similarly, the second substrate 30 is formed by processing a glass base material formed to have a thickness of 200 µm, for example, by etching. In the second substrate 30, the second reflecting film 50 having a circular shape, for example, opposed to the first reflecting film 40 is formed in a center position of an opposed surface 30A opposed to the first substrate 20.

Note that the first and second reflecting films 40, 50 are formed in circular shapes having diameters of about 3 mm, for example. The first and second reflecting films 40, 50 are reflecting films formed by AgC single layers, and they may be formed on the first and second substrates 20, 30 using a technique such as sputtering. The thickness dimensions of the AgC single-layer reflecting films are formed in 0.03 µm, for example. In the embodiment, an example of using AgC single-layer reflecting films that may spectroscopically separate the entire visible light range as the first and second reflecting films 40, 50 is shown, however, not limited to that, dielectric multilayer films having laminated films of TiO₂ and SiO₂ stacked and having a narrower wavelength range that can be spectroscopically separated, a higher transmittance of the spectroscopically separated light, a narrower half-value width of the transmittance, and better solution than those of the AgC single-layer reflecting films may be used.

Further, on the opposite surfaces to the respective opposed surfaces 20A, 30A of the first and second substrates 20, 30, anti-reflecting films (AR) (not shown) may be formed in positions corresponding to the first and second reflecting films 40, 50. The anti-reflecting films are formed by alternately stacking low-refractive-index films and high-refractive-index films, and reduce the reflectance of the visible light at the interface between the first and second substrates 20, 30 and increase the transmittance.

These first and second reflecting films 40, 50 are provided to face each other via a third gap G3 (third distance) in the voltage non-application state shown in Fig. 1. Note that, in the embodiment, the first reflecting film 40 is a fixed mirror and the second reflecting film 50 is a movable mirror, however, either or both of the first and second reflecting films 40, 50 may be made movable in response to the forms of the above described first and second substrates 20, 30.

Around the first reflecting film 40 in a plan view, a lower electrode 60 is provided on the opposed surface 20A of the first substrate 20. Similarly, an upper electrode 70 opposed to the lower electrode 60 is provided on the opposed surface 30A of the second substrate 30. In the embodiment, a second opposed surface 20A2 is provided around the first opposed surface 20A1 of the first substrate 20, and a third opposed surface 20A3 is provided around the second opposed surface 20A2.

The lower electrode 60 is not necessarily segmented, but, in the embodiment, the electrode is segmented into K (an integer number equal to or more than two) segment electrodes and includes first and second electrodes 62, 64 as an example of K = 2. The first electrode (hereinafter, referred to as "first segment electrode") 62 is formed on the third opposed surface 20A3, and the second electrode (hereinafter, referred to as "second segment electrode") 64 is formed on the second opposed surface 20A2. Note that, as will be described later, K segment electrodes 62, 64 may be set at the same voltage or different voltages.

The upper electrode 70 is a common electrode at a constant potential (for example, the ground potential) in the embodiment. The upper electrode 70 is not necessarily segmented, but, in the embodiment, the electrode is segmented into K (the integer number equal to or more than two) segment electrodes and includes third and fourth electrodes 72, 74 as an example of K = 2. The third electrode (hereinafter, referred to as "third segment electrode") 72 is formed to face the first segment electrode 62, and the fourth electrode (hereinafter, referred to as "fourth segment electrode") 74 is formed to face the second segment electrode 64. Note that, in the case of K ≥ 3, the relationships of the first and second segment electrodes 62, 64, which will be described later, may be applied to any adjacent two segment electrodes.

As shown in Fig. 1, the first and third segment electrodes 62, 72 form a pair of first opposed electrodes 80. The second and fourth segment electrodes 64, 74 form a pair of second opposed electrodes 90. That is, the lower and upper electrodes 60, 70 have the pair of first opposed electrodes 80 and the pair of second opposed electrodes 90.

### 1.1.2. Relationship between First Gap G1 and Second Gap G2 (G1 < G2)

As shown in Fig. 1, the first segment electrode 62 and the third segment electrode 72 are provided to face each other with a first gap (first distance) G1 in between. The second segment electrode 64 and the fourth segment electrode 74 are provided to face each other with a second gap (second distance) G2 in between. Further, in the embodiment, there is a relationship of first gap G1 < second gap G2.

Here, when there is the relationship of first gap G1 < second gap G2 is when an electrostatic attractive force does not substantially act between the first and second opposed electrodes 80, 90, that is, when the potential difference between the lower and upper electrodes 60, 70 is substantially zero. In other words, the state is a voltage non-application state in which an electric field is not substantially formed between the lower and upper electrodes 60, 70 or no voltage is applied at least one of the electrodes, and an initial state contrary to the drive state in which the electrostatic attractive force acts thereon.

Of the initial gaps G1, G2, the initial first gap G1 corresponding to the first and third segment electrodes 62, 72 to be driven first is narrowed by the electrostatic attractive force acting between the first segment electrode 62 and the third segment electrodes 72. Concurrently, the second gap G2 is also narrowed and the second gap G2 becomes smaller than the initial gap. Accordingly, before the second and fourth segment electrodes 64, 74 are driven, the second gap G2 has become smaller than the initial value.

Here, a comparison is tentatively made with a comparative example in which the second opposed surface 20A2 and the third opposed surface 20A3 are in the same plane and the initial values of the first and second gaps G1, G2 are the same. In the comparative example, for example, the first gap G1 when the first and third segment electrodes 62, 72 are driven first is surely larger than the second gap G2 when the second and fourth segment electrodes 64, 74 are driven later.

Here, the electrostatic attractive force F may be expressed by F = (1/2)_{ε}(V/G)²S ...(1). In equation (1), ε: permittivity, V: applied voltage (potential difference), G: gap between electrodes, and S: opposed electrode area. As known from equation (1), F is proportional to the square of the potential difference V between the lower and upper electrodes 60, 70, and inversely proportional to the square of the gap G (the first gap G1 or second gap G2) between the lower and upper electrodes 60, 70. Therefore, in the comparative example, to allow a predetermined electrostatic attractive force to act between the electrodes with the larger gap, a larger drive voltage (potential difference) than that in the embodiment in Fig. 1 is necessary. On the other hand, in the embodiment, the first gap G1 between the pair of first opposed electrodes 80 may be made smaller, and the low-voltage driving may be performed.

In Fig. 1, the initial value of the gap G1 is made smaller than the initial value of the gap G2, however, in the case where the second and fourth segment electrodes 64, 74 are driven first, the initial value of the gap G2 may be made smaller than the initial value of the gap G1, that is, the first and second gaps G1 and G2 may be different. Note that, in the embodiment, it is preferable that the first gap G1 between the pair of first opposed electrodes 80 at the outer circumference side is made smaller than the second gap G2 between the pair of second opposed electrodes 90 at the inner circumference side. This is because the wavelength-tunable operation is more easily performed if the pair of first opposed electrodes 80 at the outer circumference side are driven first as will be described later.

In the light filter 10 having the above described structure, both the first and second substrates 20, 30 are regions different in the plan view from the regions in which the reflecting films (the first and second reflecting films 40, 50) are formed and the regions in which the electrodes (the lower and upper electrodes 60, 70) are formed, and they are not stacked with the reflecting films and the electrodes unlike Patent Document 1. Accordingly, if at least one of the first and second substrates 20, 30 (the second substrate 30 in the embodiment) is a movable substrate, the movable substrate is not stacked with the reflecting films and the electrodes and its flexibility may be secured. In addition, unlike Patent Document 1, no reflecting films are formed on the lower and upper electrodes 60, 70, and thus, if the light filter 10 is used as a transmissive or reflective wavelength-tunable interference filter, there is no restriction that the lower and upper electrodes 60, 70 are transparent electrodes.

### 1.1.3. Relationship between First Gap G1 and Third Gap G3 (G1 < G3)

In the embodiment, as shown in Fig. 1, in the initial state in which the pair of first opposed electrodes 80 are opposed with the first gap G1 in between and the second opposed electrodes 90 are opposed with the second gap G2 in between, the first and second reflecting films 40, 50 are opposed with the third gap (third distance) G3 in between. In this regard, the first gap G1 may be made smaller than the third gap G3 (G1 < G3).

In this manner, the drive state in Fig. 2 may be realized. In Fig. 2, a potential difference of a predetermined value or more is provided between the pair of first opposed electrodes 80, and the pair of first opposed electrodes 80 are in contact with each other. If the first gap G1 and the third gap G3 shown in Fig. 1 satisfy the relationship of G1 < G3, a gap G3' between the first and second reflecting films 40, 50 is secured even in the drive state in Fig. 2. In addition, since the pair of first opposed electrodes 80 are in contact with each other in Fig. 2, an effect that, even when there is turbulence of voltage fluctuation or the like, the gap G3' between the first and second reflecting films 40, 50 is not varied but stabilized may be exerted. This contributes to improvements of gap accuracy between the first and second reflecting films 40, 50.

Here, since G1 < G2 in Fig. 1, a gap G2' between the pair of second opposed electrodes 90 is secured even in the drive state in Fig. 2. Therefore, when the pair of second opposed electrodes 90 are driven at the next time, the pair of first opposed electrodes 80 maintain the contact state as long as the potential difference of the predetermined value or more is continued to be provided between the pair of first opposed electrodes 80. Thus, driving of the pair of second opposed electrodes 90 may be restarted from the state in which the gap between the first and second reflecting films 40, 50 is stable to be the gap G3'. This also contributes to the improvements of gap accuracy between the first and second reflecting films 40, 50.

Note that, if the drive state in Fig. 2 is not realized, the relationship between the first gap G1 and the third gap G3 in Fig. 1 may be set to any of G1 = G3, G1 > G3, or G1 < G3.

### 1.1.4. Relationship between Second Gap G2 and Third Gap G3 (G2 < G3)

Further, in Fig. 1, the second gap G2 may be made smaller than the third gap G3 (G2 < G3). This may realize the drive state in Fig. 3. In Fig. 3, a potential difference of a predetermined value or more is provided between the pair of second opposed electrodes 90, and, even when the pair of second opposed electrodes 90 are brought into contact, a gap G3" between the first and second reflecting films 40, 50 (G3" < G3') is secured if the relationship of G2 < G3 is satisfied. In addition, if the pair of second opposed electrodes 90 are in contact with each other, an effect that, even when there is turbulence of voltage fluctuation or the like, the gap G3" between the first and second reflecting films 40, 50 is not varied but stabilized may be exerted. This also contributes to improvements of gap accuracy between the first and second reflecting films 40, 50.

Note that, if the drive state in Fig. 3 is not realized, the relationship between the second gap G2 and the third gap G3 in Fig. 1 may be set to any of G2 = G3, G2 > G3, or G2 < G3.

### 1.1.5. Forming Method of Different Gaps G1, G2 between Electrodes

To make the first and second gaps G1, G2 shown in Fig. 1 different, various methods are conceivable, and one of them is to form a stepped surface on at least one of the opposed surfaces 20A, 30A of the first and second substrates 20, 30. In Fig. 1, the first substrate 20 is a fixed substrate and the second substrate 30 is a movable substrate, a stepped surface is formed on the surface 20A on which the first reflecting film 40 and the lower electrode 60 are formed on the first substrate 20, and the first gap G1 is made smaller than the second gap G2. Since the second substrate 30 is the movable substrate, if a step is provided on the opposed surface 30A, the second substrate 30 may locally be thicker and flexibility of the second substrate 30 may be affected. There is no need to worry about that because the first substrate 20 is the fixed substrate.

Instead of forming the stepped surface on at least one of the opposed surfaces 20A, 30A of the first and second substrates 20, 30, the thickness of at least one of the lower and upper electrodes 60, 70 may locally be changed.

### 1.1.6. Lower Electrode

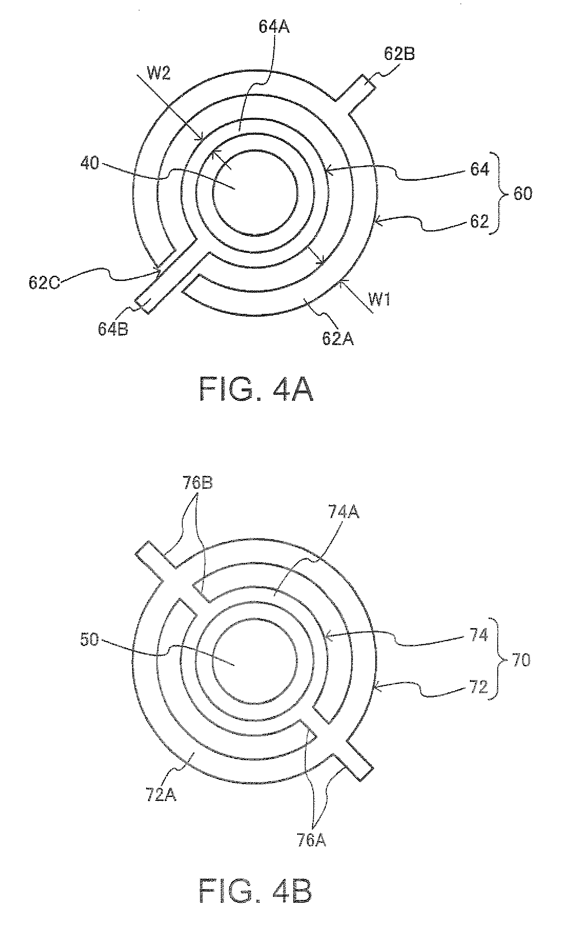

The lower electrode 60 provided on the first substrate 20 is formed as a solid electrode in a region containing the region opposed to the upper electrode 70 (the third and fourth segment electrodes 72, 74) formed on the second substrate 30 of the first substrate 20, Alternatively, the lower electrode 60 may have the same configuration as the upper electrode 70 shown in Fig. 4B. In the embodiment, as will be described later, this is because the same voltage may be applied to drive the first and second segment electrodes 62, 64 forming the lower electrode 60.

Instead, the K segment electrodes 62, 64 forming the lower electrode 60 may be arranged in coaxial rings around the center of the first reflecting film 40 as shown in Fig. 4A. That is, the first segment electrode 62 has a first ring electrode part 62A, the second segment electrode 64 has a second ring electrode part 64A inside of the ring electrode part 62A, and the respective ring electrode parts 62A, 64A are formed in coaxial rings around the first reflecting film 40. Note that "ring" is a term not limited to an endless ring like the second ring electrode part 64A, but including a discontinuous ring shape like the first ring electrode part 62A, and not limited to a circular ring, but including a rectangular ring, a polygonal ring, or the like.

In this configuration, as shown in Fig. 1, the respective first and second segment electrodes 62, 64 are provided line-symmetric with respect to a center line L of the first reflecting film 40. Thereby, the electrostatic attractive force acting between the lower and upper electrodes 60, 70 when a voltage is applied acts line-symmetrically with respect to the center line L of the first reflecting film 40, and thus, the parallelism of the first and second reflecting films 40, 50 becomes higher.

Note that, as shown in Fig. 4A, a ring width W1 of the first segment electrode 62 may be made wider than a ring width W2 of the second segment electrode 64 (W1 > W2). Since an electrostatic attractive force is proportional to an electrode area, the electrostatic attractive force generated by the first segment electrode 62 is more advantageous when the force is required to be larger than the electrostatic attractive force generated by the second segment electrode 64. More specifically, the outer first segment electrode 62 is provided nearer the substrate support part 22 functioning as a hinge part than the second segment electrode 64. Accordingly, the first segment electrode 62 is necessary to generate the larger electrostatic attractive force acting against the resistance force in the hinge part 40. The outer first segment electrode 62 has the larger diameter than that of the inner second segment electrode 64, and the first segment electrode 62 is larger even when width W1 = width W2. Therefore, though width W1 = width W2 may be set, by making the ring width W1 wider to further increase the area, the larger electrostatic attractive force may be generated.

Here, a first extraction wire 62B is connected to the first segment electrode 62 and a second extraction wire 64B is connected to the second segment electrode 64, respectively. These first and second extraction wires 62B, 64B are formed to extend in radial directions from the center of the first reflecting film 40, for example. A first slit 62C that makes the first ring electrode part 62A of the first segment electrode 62 discontinuous is provided. The second extraction wire 64B extending from the inner second segment electrode 64 is extracted to the outside of the first segment electrode 62 via the first slit 62C formed on the outer first segment electrode 62.

In this manner, in the case where the first and second segment electrodes 62, 64 are the ring electrode parts 62A, 64A, respectively, the extraction path of the second extraction wire 64B of the inner second segment electrode 64 may easily be secured by the first slit 62C formed in the outer first segment electrode 62.

### 1.1.7. Upper Electrode

The upper electrode 70 provided on the second substrate 30 is formed as a solid electrode in a region containing the region opposed to the lower electrode 60 (the first and second segment electrodes 62, 64) formed on the first substrate 20 of the second substrate 30. This is because the upper electrode 70 is the common electrode set at the constant voltage.

Instead, the upper electrode 70 provided on the second substrate 30 that displaces relative to the first substrate 20 as in the embodiment may be the K segment electrodes like the lower electrode 60. Also, the K segment electrodes may be arranged in coaxial rings around the center of the second reflecting film 50. In this manner, the electrode area formed on the movable second substrate 30 is reduced to the requisite minimum, and thus, the stiffness of the second substrate 30 becomes lower and the flexibility may be secured.

The K segment electrodes forming the upper electrode 70 may have the third segment electrode 72 and the fourth segment electrode 74 as shown in Figs. 1 and 4B. The third segment electrode 72 has a third ring electrode part 72A, the fourth segment electrode 74 has a fourth ring electrode part 74A inside of the third ring electrode part 72A, and the respective ring electrode parts 72A, 74A are formed in coaxial rings around the second reflecting film 50. Note that "coaxial rings" means the same as that for the lower electrode 60. The third segment electrode 72 is opposed to the first segment electrode 62 and the fourth segment electrode 74 is opposed to the second segment electrode 64. Therefore, in the embodiment, a ring width of the third segment electrode 72 (same as the ring width W1 of the first segment electrode 62) is wider than a ring width of the fourth segment electrode 74 (same as the ring width W2 of the second segment electrode 64).

Further, the third and fourth segment electrodes 72, 74 are electrically connected to each other and set at the equal potential. Accordingly, for example, third and fourth extraction wires 76A, 76B are formed to extend in radial directions from the center of the second reflecting film 50, for example. The respective third and fourth extraction wires 76A, 76B are electrically connected to both the inner third segment electrode 72 and the outer fourth segment electrode 74. Note that the third and fourth segment electrodes 72, 74 as a common electrode may be connected by one extraction wire, however, if plural extraction wires are used, the wiring capacity may be reduced and the charging and discharging speeds of the common electrode may be made higher.

Note that the first and second segment electrodes 62, 64 forming the lower electrode 60 may be driven by application of an equal voltage, and thus, the structure in Fig. 4B may be employed for the lower electrode 60.

### 1.1.8. Measures for Preventing Sticking of Pair of Opposed Electrodes

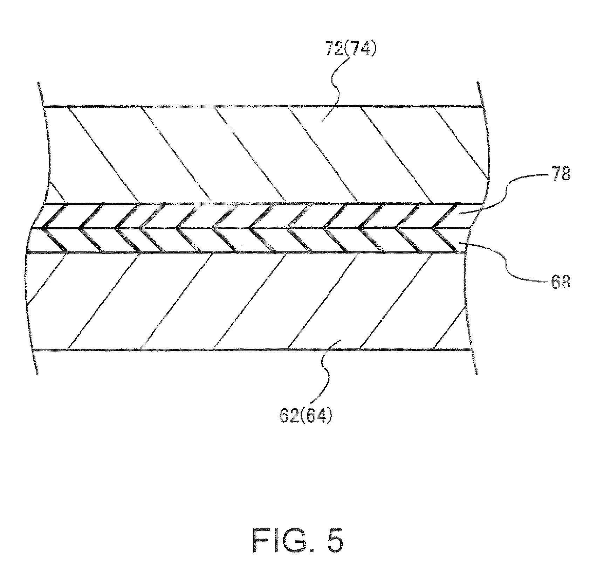

In the embodiment, in the case where the drive state in Fig. 2 or Fig. 3 is realized, the pair of first opposed electrodes 80 or the pair of second opposed electrodes 90 are brought into contact. In this regard, galvanically short-circuiting between the electrodes due to contact should be prevented. For the purpose, as shown in Fig. 5, a first insulating film 68 may be formed on the surface of the first segment electrode 62 or the second segment electrode 64 and a second insulating film 78 may be formed on the surface of the third segment electrode 72 or the fourth segment electrode 74. Of the four electrodes 62, 64, 72, 74, the insulating films may be formed on one of the electrodes 62, 72 opposed to each other and one of the electrodes 64, 74 opposed to each other. Alternatively, the insulating films may be formed on both of the electrodes 62, 72 opposed to each other and both of the electrodes 64, 74 opposed to each other.

Further, in order to prevent the pair of first opposed electrodes 80 or the pair of second opposed electrodes 90 from sticking to each other, the first and second insulating films 68, 78 in contact with each other may be formed using the same material (e.g., SiO₂ or the like). Contrary, in the case where insulating films of different materials exist on the surfaces, contact charging is caused by repeated contact and separation. If the contact charge is greater, even when no voltage is applied, a potential difference is produced between the opposed electrodes, and the distance between electrodes changes. Accordingly, also the gap between the reflecting films 40, 50 changes and the high gap accuracy may not be secured. Further, if the contact charge is greater, the opposed electrodes may stick together. By using the insulating films 68, 78 of the same material on the opposed surfaces of the opposed electrodes 62, 72 (64, 74) like in the structure of Fig. 5, generation of contact charge may be suppressed and the above described adverse effect may be overcome.

### 1.1.9. Overlapping Region of Lower and Upper Electrodes

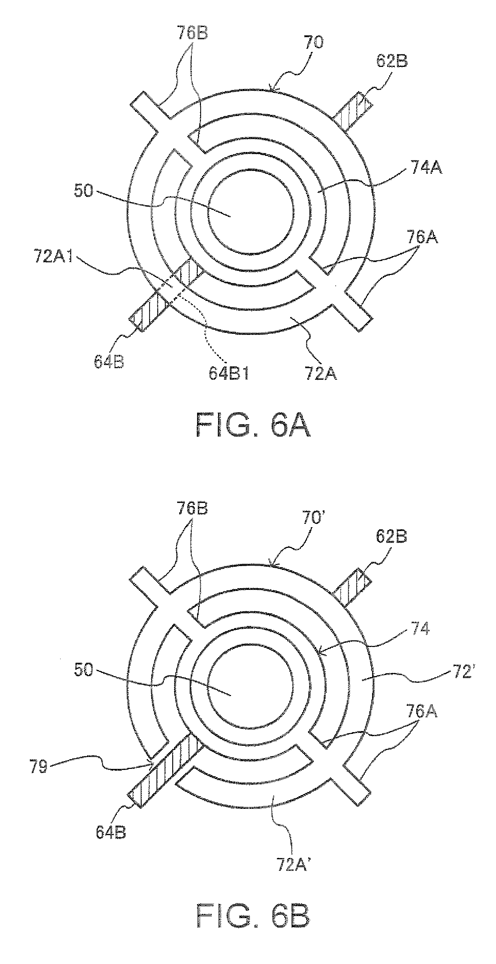

Fig. 6A shows an overlapping state in a plan view of the lower electrode 60 shown in Fig. 4A and the upper electrode 70 shown in Fig. 4B seen from the second substrate 30 side. In Fig. 6A, the lower electrode 60 located at the lower side does not appear in the plan view seen from the second substrate 30 side because the first and second segment electrodes 62, 64 are opposed to the third and fourth segment electrodes 72, 74 of the upper electrode 70. Regarding the lower electrode 60 located at the lower side, only the first and second extraction wires 62B, 64B appear in the plan view seen from the second substrate 30 side as shown by hatching. Regarding the second extraction wire 64B, an intermediate region 64B1 is opposed to an opposed region 72A1 of the third ring electrode part 72A because the third ring electrode part 72A of the upper electrode 70 is continuous in the circumferential direction.

In the embodiment, as shown in Fig. 4A, the outer first segment electrode 62 of the lower electrode 60 has the first slit 62C, and thus, the electrostatic attractive force based on the voltage applied to the first segment electrode 62 does not act in the region of the first slit 62C.

On the other hand, the second extraction wire 64B is provided within the first slit 62C as shown in Fig. 4A, and thereby, the electrostatic attractive force acting between the second extraction wire 64B at the same potential as that of the inner second segment electrode 64 and the outer third segment electrode 72 may be generated within the first slit 62C. As an advantage, for example, in the case where the first and second segment electrodes 62, 64 are driven substantially at the same voltage, a uniform electrostatic attractive force may be generated nearly along the entire circumference (containing the opposed region 72A1 to the first slit 62C) of the outer third segment electrode 72.

Fig. 6B shows an overlapping state in a plan view of lower and upper electrodes 60, 70' as a modified example seen from the second substrate 30 side. The upper electrode 70' in Fig. 6B is different from the upper electrode 70 in Fig. 6A in that a third segment electrode 72' further has a second slit 79 that makes the third ring electrode part 72A' discontinuous in the position opposed to the first slit 62C of the lower electrode 60. For the rest, the upper electrode 70' in Fig. 6B is the same as that of the upper electrode 70 in Fig. 6A.

In the configuration, there is no electrode opposed to the second extraction wire 64B. Accordingly, for example, when the inner second segment electrode 64 is driven, the unwanted electrostatic attractive force acting between the second extraction wire 64B at the same potential as that of the inner second segment electrode 64 and the outer third segment electrode 72' may be prevented from being generated within the first slit 62C.

### 1.1.10. Extraction Wires

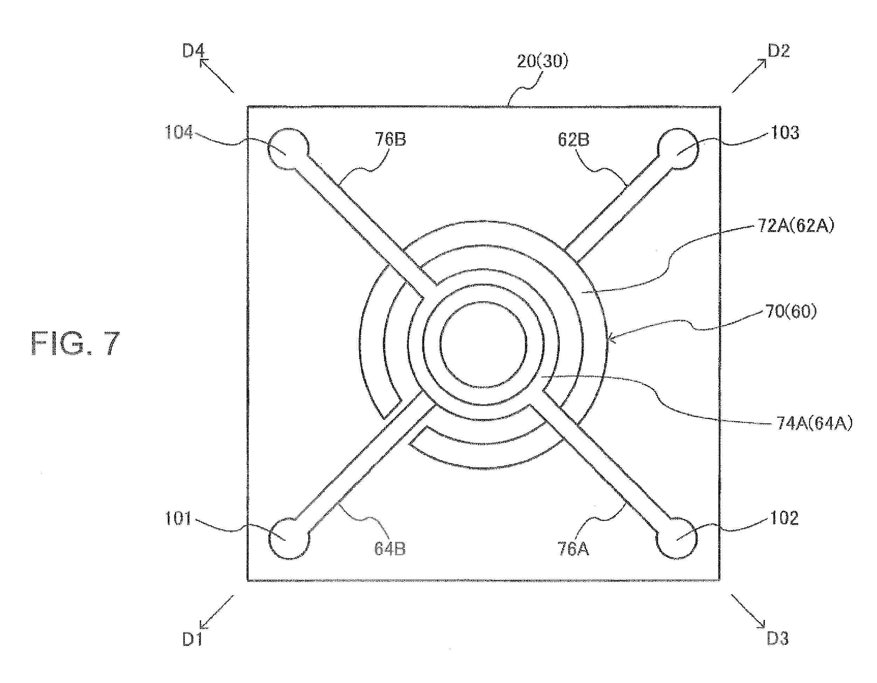

Fig. 7 is a plan view seen from the second substrate 30 side through the second substrate 30 showing a wiring layout of first to fourth extraction wires 62B, 64B, 76A, 76B. In Fig. 7, at least one of the first and second substrates 20, 30 is a rectangular substrate having first and second diagonal lines. In the embodiment, each of the first and second substrates 20, 30 is formed in a square, 10 mm on a side, for example. Assuming that the direction in which the second extraction wire 64B extends from the second segment electrode 64 along the first diagonal line is a first direction D1 the first extraction wire 62B extends in a second direction D2 opposite to the first direction D1 on the first diagonal line. The third extraction wire 76A extends in a third direction D3 along the second diagonal line. The fourth extraction wire 76B extends in a fourth direction D4 opposite to the third direction D3 on the second diagonal line. Further, in the four corner positions of the rectangular substrates 20, 30 in the plan view, first to fourth connection electrode parts 101 to 104 to which the first to fourth extraction wires 62B, 64B, 76A, 76B are connected are provided.

According to the configuration, first, the first and second extraction wires 62B, 64B formed on the first substrate 20 and the third and fourth extraction wires 76A, 76B formed on the second substrate 30 do not overlap in the plan view and not to form parallel electrodes. Accordingly, no wasted electrostatic attractive force is generated between the first and second extraction wires 62B, 64B and the third and fourth extraction wires 76A, 76B. Further, the wiring lengths of the first to fourth extraction wires 62B, 64B, 76A, 76B led to the first to fourth connection electrode parts 101 to 104, respectively, become the shortest. Therefore, the wiring capacity and wiring resistance based on the wiring lengths of the first to fourth extraction wires 62B, 64B, 76A, 76B and the parasitic capacity become smaller, and the first to fourth segment electrodes 62, 64, 72, 74 may be charged and discharged at high speeds.

Note that the respective parts of the first to fourth external connection electrode parts 101 to 104 may be provided on one or both of the first and second substrates 20, 30. In the case where the first to fourth external connection electrode parts 101 to 104 may be provided on only one of the first and second substrates 20, 30, the extraction wires provided on the other of the first and second substrates 20, 30 may be connected to the external connection electrode parts formed on the one substrate using conductive paste or the like. The first to fourth external connection electrode parts 101 to 104 are connected to the outside via connection parts of lead wires or wire bonding or the like.

Furthermore, the first to fourth extraction wires 62B, 64B, 76A, 76B may intersect with plasma-polymerized films bonding the first and second substrates 20, 30, for example. Alternatively, the first to fourth extraction wires 62B, 64B, 76A, 76B may be extracted to the outside over the bonded surface via groove parts provided one of the bonded surfaces of the first and second substrates 20, 30.

### 1.2. Voltage Control System of Light Filter

### 1.2.1 Outline of Application Voltage Control System Block

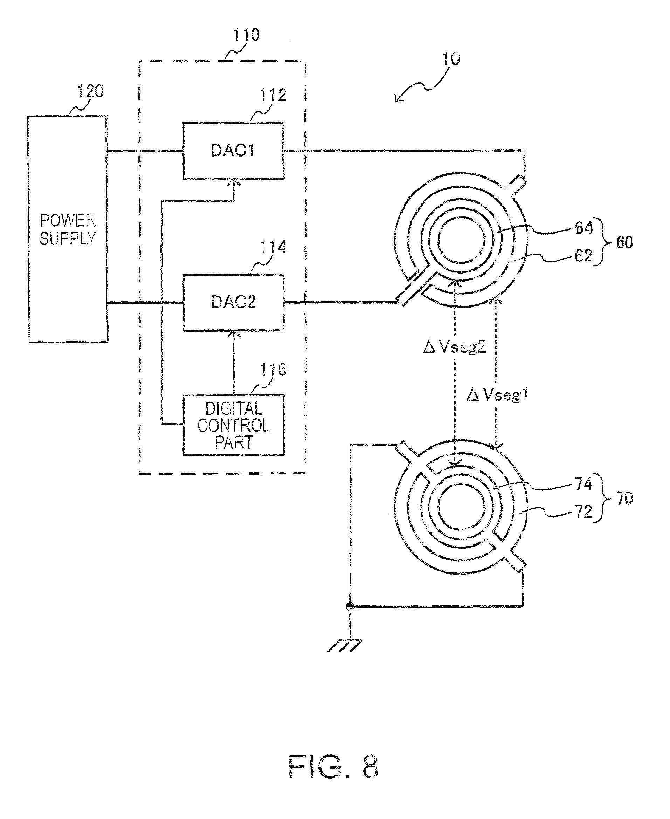

Fig. 8 is a block diagram of an application voltage control system of the light filter 10 having the lower electrode 60 shown in Fig. 4A and the upper electrode 70 shown in Fig. 4B. As shown in Fig. 8, the light filter 10 has a potential difference control unit 110 that controls the potential difference between the lower electrode 60 and the upper electrode 70. In the embodiment, the upper electrode 70 as a common electrode (the third and fourth segment electrodes 72, 74) is fixed to a constant common voltage, for example, the ground voltage (0 V). Accordingly, the potential difference control unit 110 changes application voltages to the first and second segment electrodes 62, 64 as K segment electrodes forming the lower electrode 60 to control an outer circumference side potential difference Δ Vseg1 and an inner circumference side potential difference Δ Vseg2 between the respective first and second segment electrodes 62, 64 and the upper electrode 70, respectively. Note that the upper electrode 70 may apply a common voltage other than the ground potential, and, in this case, the potential difference control unit 110 may control application/non-application of the common voltage to the upper electrode 70.

In Fig. 8, the potential difference control unit 110 includes a first segment electrode drive part connected to the first segment electrode 62, for example, a first digital-analog converter (DAC1) 112, a second segment electrode drive part connected to the second segment electrode 64, for example, a second digital-analog converter (DAC2) 114, and a digital control part 116 that controls, for example, digitally controls the converters. To the first and second digital-analog converters 112, 114, voltages from a power supply 120 are supplied. The first and second digital-analog converters 112, 114 are supplied with voltages from the power supply 120 and output analog voltages in response to digital values from the digital control part 116. For the power supply 120, one provided on an analytical instrument or optical equipment to which the light filter 10 is attached may be used, or a power supply exclusive for the light filter 10 may be used.

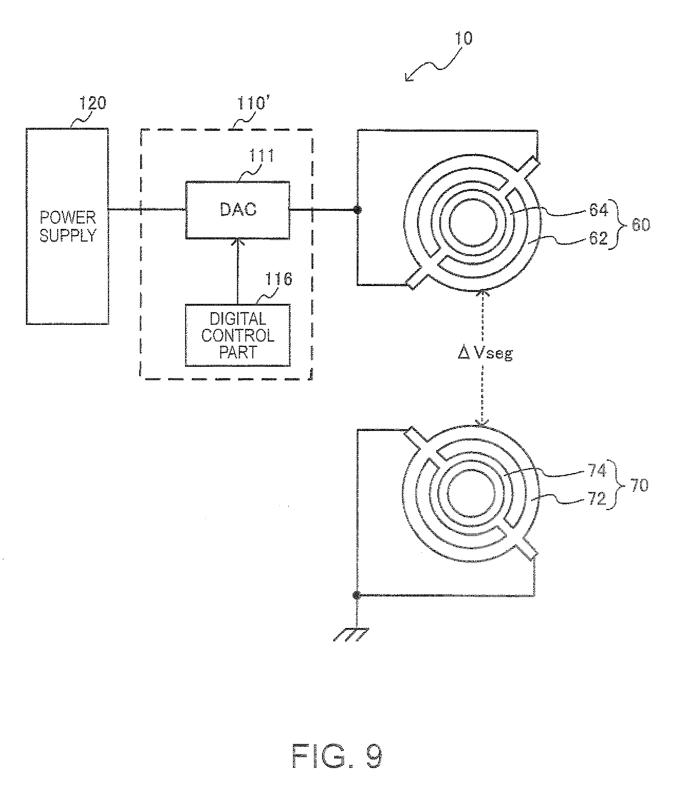

Fig. 9 is a block diagram of an application voltage control system of the light filter 10 having the lower and upper electrodes 60, 70 both shown in Fig. 4B. In this case, a potential difference control unit 110' includes one digital-analog converter (DAC) 111 connected to the first and second segment electrodes 62, 64 of the lower electrode 60, and a digital control part 116 that controls the converter. The potential difference control unit 110' variably sets both the potential difference between the first and third segment electrodes 62, 72 and the potential difference between the second and fourth segment electrodes 64, 74 to an equal potential difference ΔVseg.

### 1.2.2. Driving Method of Light Filter

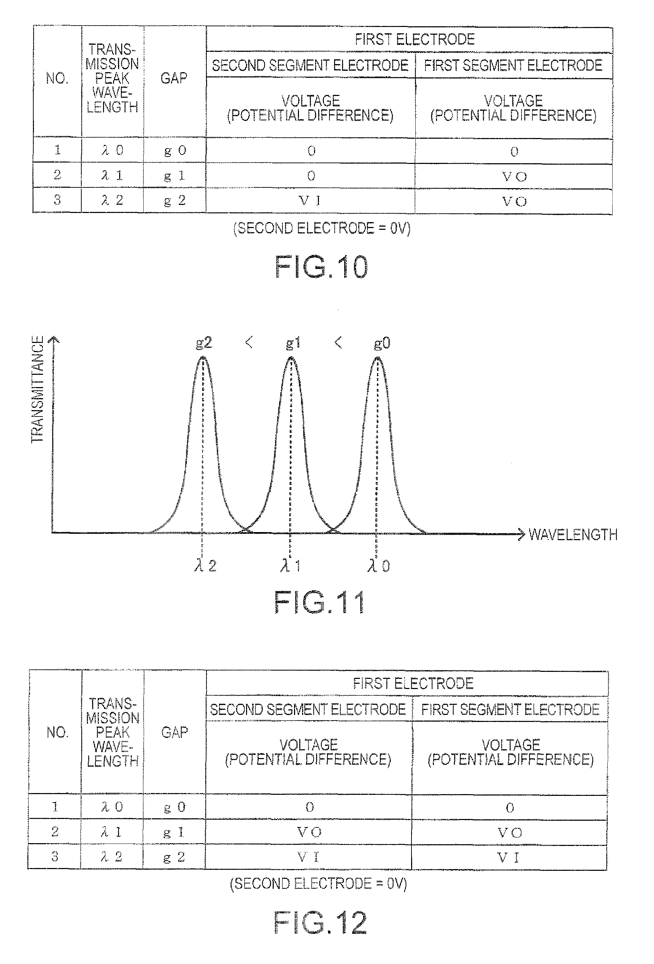

Fig. 10 is a characteristic table showing an example of voltage table data as original data of control in the digital control part 116 shown in Fig. 8. The voltage table data may be provided in the digital control part 116 itself, or may be provided on an analytical instrument or optical equipment to which the light filter 10 is attached.

Fig. 10 shows an example of a driving method in the case where the lower electrode 60 of the pairs of first and second opposed electrodes 80, 90 includes the first and second segment electrodes 62, 64 insulated from each other as shown in Fig. 4A. In this case, the potential difference control unit 110 independently sets and controls voltages for the first and second segment electrodes 62, 64, respectively, and sets and controls the upper electrode 70 (the third and fourth segment electrodes 72, 74) of the pairs of first and second opposed electrodes 80, 90 to a common voltage (for example, the ground voltage). In other words, Fig. 10 shows an example for N = 3 as voltage table data for varying the gap between the first and second reflecting films 40, 50 at the total N levels by sequentially applying voltages to the respective K segment electrodes 62, 64. The potential difference control unit 110 applies the voltage values set with respect to each of the K segment electrodes (the first and second segment electrodes 62, 64) to the respective K segment electrodes (the first and second segment electrodes 62, 64) according to the voltage table data shown in Fig. 10.

As shown in Fig. 10, in Table NO. 1, no voltage is applied to the first and second electrodes 62, 64 (voltage zero) and the potential difference between the lower and upper electrodes 60, 70 is zero, and thus, the initial state shown in Fig. 1 is provided.

In Table NO. 2 in Fig. 10, a voltage VO is applied to the first segment electrode 62, and no voltage is applied to the second segment electrode 64 (voltage zero). In this regard, a potential difference VO is produced between the outer first and third segments 62, 72, and the pair of first opposed electrodes 80 are brought into contact as shown in Fig. 2. The first gap G1 between the first and third segments 62, 72 before driving is relatively small, and the drive voltage VO may be a relatively low voltage from the above described equation (1).

In Table NO. 3 in Fig. 10, the voltage VO is continued to be applied to the first segment electrode 62 while a voltage VI is applied to the second segment electrode 64. In this regard, as shown in Fig. 3, the potential difference VO is produced between the outer first and third segments 62, 72 and the contact between the pair of first opposed electrodes 80 is maintained, and a potential difference VI is produced between the inner second and fourth segment electrodes 64, 74 and the pair of second opposed electrodes 90 are brought into contact. In the initial state shown in Fig. 1, the second gap G2 between the first and third segments 62, 72 is larger than the first gap G1, however, then, the second gap G2' may be made nearly as small as the first gap G1 as shown in Fig. 2. Therefore, also the drive voltage VI may be a relatively low voltage from the above described equation (1).

In the driving method, the maximum voltage Vmax supplied to the light filter 10 may respectively be assigned to the drive voltage VO and the drive voltage VI (for example, Vmax = VO = VI). In addition, the maximum voltage Vmax to be supplied to the light filter 10 may be a lower voltage.

By the voltage control, in the light filter 10, wavelength transmission characteristics shown in Fig. 11 may be realized. Fig. 11 shows wavelength transmission characteristics when the size of the third gap G3 between the first and second reflecting films 40, 50 is changed from g0 to g2, for example. In the light filter 10, when the size of the third gap G3 between the first and second reflecting films 40, 50 is made variable from g0 to g2 (g0 > g1 > g2), for example, the transmission peak wavelength is determined in response to the size of the third gap G3. That is, the light having a wavelength λ transmitted through the light filter 10 is light with an integer (n) multiple of its half wavelength (λ/2) equal to the third gaps G3, G3', G3" in Figs. 1 to 3 (for example, n × λ = 2G3). The light with an integer (n) multiple of its half wavelength (λ/2) not equal to the third gap G3 is mutually interfered and attenuated in the process of multiple reflection by the first and second reflecting films 40, 50, but not transmitted.

Therefore, as shown in Fig. 11, the size of the third gap G3 between the first and second reflecting films 40, 50 is changed to g0, g1, g2 to be smaller, and thereby, the light transmitted through the light filter 10, that is, the transmission peak wavelength sequentially changes to λ0, λ1, λ2 (λ0 > λ1 > λ2) to be shorter.

Here, at driving according to the voltage table data in Fig. 10, first, the third gap G3 (= g0) in Fig. 1 is uniquely determined because of the initial state of the light filter 10, then, the outer pair of first opposed electrodes 80 are brought into contact and the third gap G3' (= g1) in Fig. 2 is uniquely determined, and finally, the inner pair of second opposed electrodes 90 are brought into contact and the third gap G3" (= g2) in Fig. 3 is uniquely determined. In this manner, wavelength-tunable driving with improved gap accuracy may be realized for disturbance noise of voltage fluctuation or the like.

### 1.2.3. Another Driving Method of Light Filter

Fig. 12 is a characteristic table showing an example of voltage table data as original data of control in the digital control part 116 shown in Fig. 9. Fig. 12 shows an example of a driving method in which the potential difference control unit 110 sets and controls the lower electrode 60 of the pairs of first and second opposed electrodes 80, 90 to a first voltage and sets and controls the upper electrode 70 of the pairs of first and second opposed electrodes 80, 90 to a second voltage different from the first voltage. In other words, Fig. 12 shows voltage table data for varying the gap between the first and second reflecting films 40, 50 at N = 3 levels by sequentially applying common voltages to the respective K segment electrodes 62, 64. The potential difference control unit 110 applies the voltage values commonly set for the K segment electrodes (the first and second segment electrodes 62, 64) to the K segment electrodes (the first and second segment electrodes 62, 64) at the same time according to the voltage table data shown in Fig. 12.

As shown in Fig. 12, in Table NO. 1, no voltage is applied to the first and second segment electrodes 62, 64 (voltage zero) and the potential difference between the lower and upper electrodes 60, 70 is zero, and thus, the initial state shown in Fig. 1 is provided. In Table NO. 2, a voltage VO is applied to the first and second segment electrodes 62, 64. In this regard, the second substrate 30 moves by the amount of the relatively small first gap G1 shown in Fig. 1 due to the electrostatic attractive force caused by the potential difference VO produced between the outer first and third segment electrodes 62, 72, and the pair of first opposed electrodes 80 are brought into contact as shown in Fig. 2. The first gap G1 between the first and third segment electrodes 62, 72 before driving is relatively small, and the drive voltage VO may be a relatively low voltage from the above described equation (1) as is the case of Fig. 10.

In Table NO. 3 in Fig. 12, a voltage VI (VI > VO) is applied to the first and second segment electrodes 62, 64. In this regard, as shown in Fig. 3, a potential difference VI larger than the potential difference VO is produced between the outer first and third segment electrodes 62, 72 and the contact between the pair of first opposed electrodes 80 is maintained, and the potential difference VI larger than the potential difference VO is also produced between the inner second and fourth segment electrodes 64, 74 and the pair of second opposed electrodes 90 are brought into contact. In the initial state shown in Fig. 1, the second gap G2 between the first and third segment electrodes 62, 72 is larger than the first gap G1, however, then, the second gap G2' may be made nearly as small as the first gap G1 as shown in Fig. 2. Therefore, although the drive voltage VI is larger than the drive voltage VO, it may be a relatively low voltage from the above described equation (1). By the voltage control, in the light filter 10, wavelength transmission characteristics shown in Fig. 11 may also be realized.

### 1.2.4. Yet Another Driving Method of Light Filter

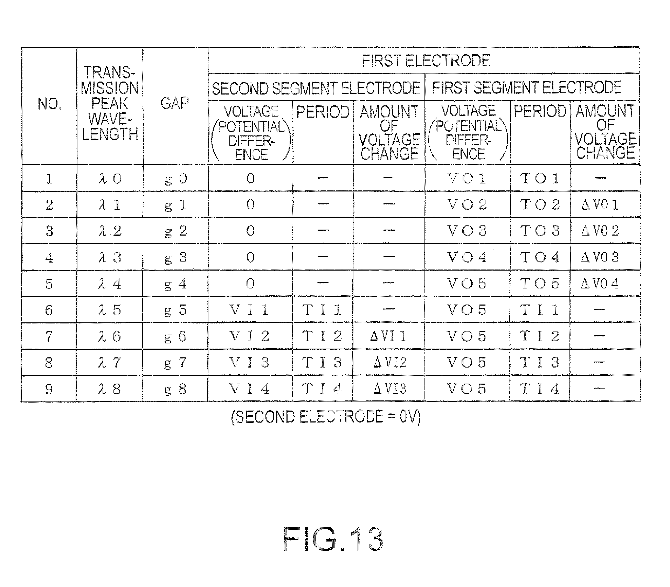

Fig. 13 shows voltage table data for varying the gap between the first and second reflecting films 40, 50 at N = 9 levels by sequentially applying voltages to the respective K segment electrodes 62, 64. Note that, in Fig. 13, the case where both of the respective potential differences between the first and second segment electrodes 62, 64 and the upper electrode 70 are 0 V is not included in the gap variable range of N levels. Driving at N = 10 levels may be performed by including the initial state of the potential difference of zero.

As shown in Fig. 13, L = 4 kinds of voltages (VI1 to VI4: VI1 < VI2 < VI3 < VI4) are applied to the first segment electrode 62, M = 5 kinds of voltages (VO1 to VO5: VO1 < VO2 < VO3 < VO4 < VO5) are applied to the second segment electrode 64, and the third gap G3 between the first and second reflecting films 40, 50 is made variable at 9 (N = L + M = 9) levels of g0 to g8. For the numbers of L and M, the application voltage of zero (potential difference zero) may be counted.

Here, the values of L, M, N may arbitrarily be changed, however, it is preferable to set them to L ≥ 3, M ≥ 3, N ≥ 6. If L ≥ 3, M ≥ 3, N ≥ 6, the outer circumference side potential difference Δ Vseg1 and the inner circumference side potential difference Δ Vseg2 shown in Fig. 8 may respectively be switched from a first potential difference ΔV1 to a second potential difference ΔV2 larger than the first potential difference ΔV1 and to a third potential difference ΔV3 larger than the second potential difference ΔV2, which are set with respect to each of the first and second segment electrodes 62, 64. Thereby, compared to the case of voltage driving with two values as in Patent Document 3, the transmission wavelength may be changed at many levels without increase in the number of segment electrodes.

In Fig. 13, since the transmission peak wavelength is made variable at nine levels from the maximum wavelength λ0 = 700 nm to the minimum wavelength λ8 = 380 nm of the transmission peak wavelength, for example, the first gap G1 between the first and second reflecting films 40, 50 may be varied at nine levels from the maximum gap g0 = 300 nm to the minimum gap g8 = 140 nm, for example. In addition, in Fig. 13, by setting the gaps g0 to g8 at the nine levels from the maximum gap g0 to the minimum gap g8 at equal intervals (= 40 nm), the wavelengths λ0 to λ8 at the nine levels from the maximum wavelength λ0 to the minimum wavelength λ8 may be set at equal intervals (= 40 nm). In this manner, by changing the size of the first gap G1 between the first and second reflecting films to be sequentially narrower by a fixed amount, the transmission peak wavelength may be shorter by the fixed amount.

As shown in Fig. 13, first, the potential difference control unit 110 sequentially applies the voltages VO1 to VO5 to the outer first segment electrode 62. Since the upper electrode 70 is at 0 V, regarding the potential difference between the upper electrode 70 and the first segment electrode 62, an outer circumference side potential difference Vseg1 may sequentially be made larger to the first potential difference VO1, the second potential difference VO2, the third potential difference VO3, the fourth potential difference VO4, the fifth potential difference VO5. Thereby, the size of the third gap G3 between the first and second reflecting films 40, 50 sequentially becomes smaller to be g0 → g1 → g2→ g3 → g4. As a result, the light transmitted through the light filter 10, that is, the transmission peak wavelength sequentially changes to be shorter as λ0 → λ1 → λ2 → λ3 → λ4.

Here, in Tables NO. 1 to NO. 4 shown in Fig. 13, the size of the first gap G1 between the pair of first opposed electrodes 80 sequentially becomes smaller, and, when the maximum voltage VO5 is applied to the first segment electrode 62 in Table NO. 5, the pair of first opposed electrodes 80 are brought into contact as shown in Fig. 2.

That is, the potential difference control unit 110 sets and controls the pair of first opposed electrodes 80 to the first potential difference (one of VO1 to VO4) with the narrower gap than the first gap G1, then, sets and controls the electrodes to the second potential (VO5) larger than the first potential difference, and thereby, the pair of first opposed electrodes 80 may be brought into contact. In this manner, the pair of first opposed electrodes 80 may be switched between the noncontact state and the contact state with other gaps than the first gap G1, and thereby, the distance between the first and second reflecting films 40, 50 may be varied at the more levels than those in the driving methods in Figs. 10 and 12.

Further, in the driving method in Fig. 13, the potential difference control unit 110 may bring the pair of first opposed electrodes 80 into contact before producing the potential difference between the pair of second opposed electrodes 90. In other words, the potential difference control unit 110 may bring the pair of first opposed electrodes 80 into contact before applying a voltage to the inner second segment electrode 64, and thereby, may uniquely set the distance between the first and second reflecting films 40, 50. Accordingly, the reference position at the subsequent driving of the inner second segment electrode 64 by application of a voltage may be set with the pair of first opposed electrodes 80 in contact. Therefore, the gap accuracy in the process in which the third gap G3 between the first and second reflecting films 40, 50 changes may be improved.

Then, as shown in Fig. 13, the potential difference control unit 110 sequentially applies the voltages VI1 to VI4 to the inner second segment electrode 64 while maintaining the application of the maximum voltage VO5 to the first segment electrode 62. Since the upper electrode 70 is at 0 V, regarding the potential difference between the upper electrode 70 and the second segment electrode 64, the inner circumference side potential difference Vseg2 may sequentially be made larger to the first potential difference VI1, the second potential difference VI2, the third potential difference VI3, the fourth potential difference VI4. Thereby, the size of the third gap G3 between the first and second reflecting films 40, 50 sequentially becomes smaller to be g5 → g6 → g7→ g8. As a result, the light transmitted through the light filter 10, that is, the transmission peak wavelength sequentially changes to be shorter as λ5 → λ6 → λ7 → λ8.

Here, in Tables NO. 5 to NO. 8 shown in Fig. 13, the size of the second gap G2 between the pair of second opposed electrodes 90 sequentially becomes smaller, and, when the maximum voltage VI4 is applied to the second segment electrode 64 in Table NO. 9, the pair of second opposed electrodes 90 are brought into contact as shown in Fig. 3. That is, the potential difference control unit 110 maintains the contact between the pair of first opposed electrodes 80 and sets and controls the pair of second opposed electrodes 90 to the third potential difference (one of VI1 to VI3), then, sets and controls the electrodes to the fourth potential (VI4) larger than the third potential difference, and thereby, the pair of second opposed electrodes 90 may be brought into contact. In this manner, the pair of second opposed electrodes 90 may be switched between the noncontact state and the contact state with other gaps than the second gap G2, and thereby, the distance between the first and second reflecting films 40, 50 may be varied at more levels than those in the driving methods in Figs. 10 and 12.

Further, when the pair of second opposed electrodes 90 are brought into contact, the distance between the first and second reflecting films 40, 50 may uniquely be set, and the gap accuracy may be improved. Note that, even when the maximum voltage VI4 is applied to the second segment electrode 64 in Table NO. 9, it is not necessarily to bring the pair of second opposed electrodes 90 into contact.

In this manner, since the potential difference control unit 110 switches the outer circumference side potential difference Vseg1 at least from the first potential difference VO1 to the second potential difference VO2 larger than the first potential difference VO1, and further, to the third potential difference VO3 larger than the second potential difference VO2, and the inner circumference side potential difference Vseg2 at least from the first potential difference VO1 to the second potential difference VO2 larger than the first potential difference VI1, and further, to the third potential difference VI3 larger than the second potential difference VI2, the damped free vibration of the second substrate 30 at the movable side may be suppressed and the rapid wavelength-tunable operation may be performed. In addition, the potential difference control unit 110 applies at least the first segment voltage VO1, the second segment voltage VO2, and the third segment voltage VO3 to the first segment electrode 62 and applies at least the first segment voltage VI1, the second segment voltage VI2, and the third segment voltage VI3 to the second segment electrode 64 as the voltages of three or more values (the voltage zero may be included) to the respective first and second electrodes 62, 64. Therefore, by driving only respective one of the first and second segment electrodes 62, 64, the gaps may respectively be varied at the three or more levels, and it is not necessary to increase the number of segment electrodes of the lower electrode 60 like in the driving example in Fig. 10.

Here, given that the maximum value of the application voltage is Vmax and the gap is variable at N levels, if a comparative example in which the lower electrode 60 is not segmented into plural parts is assumed, it is necessary to segment the maximum voltage Vmax into N and assign application voltages in the comparative example. In this regard, the minimum value of the amount of voltage change between the different application voltages is given as ΔVlmin. On the other hand, in the embodiment, for the application voltages to the respective K segment electrodes, the maximum voltages Vmax may be used in full scale. In this regard, with respect to each of the K segment electrodes, the minimum value of the amount of voltage change between the different application voltages applied to the same segment electrodes is given as ΔVkmin. In this case, it is clear that ΔVlmin < ΔVkmin is satisfied.

In this manner, if the minimum amount of voltage change ΔVkmin may be secured to be larger, even when the application voltages to the K segment electrodes 62, 64 due to noise depending on power supply fluctuation, environments, or the like, the gap variations become smaller. That is, the sensitivity to noise is smaller, in other words, the voltage sensitivity is smaller. Thereby, the gap control with high accuracy may be performed, and feedback control of the gap as in Patent Document 1 is not necessarily required. Further, even when the feedback control of the gap is performed, the gap may be stabilized early because the sensitivity to noise is small.

Further, since independent plural (K) pairs of first and second opposed electrodes 80, 90 arranged only around the first and second reflecting films 40, 50 in the plan view are provided, the control force that finely changes the gap between the first and second reflecting films 40, 50 while keeping their parallelism may be produced. This is because, when electrodes are provided on the first and second reflecting films at the center unlike the case, it is difficult to maintain the parallelism of the first and second reflecting films unless the center electrode area is secured significantly larger. In the embodiment, the regions of the first and second reflecting films 40, 50 at the center side are non-driven regions and the regions around them are driven regions, and thereby, the parallelism of the first and second reflecting films 40, 50 is maintained. The parallelism of the first and second reflecting films 40, 50 is an important technical element for a Fabry-Perot interference filter that attenuates the light of unwanted wavelength by interference of multiple reflection between the first and second reflecting films 40, 50.

### 1.2.4.1 Amounts of Voltage Change (Absolute Value of Difference between First Potential Difference and Second Potential Difference)

The potential difference control unit 110 may make the absolute value of the difference between the second potential difference and the third potential difference smaller than the absolute value of the difference between the first potential difference and the second potential difference with respect to each of the outer circumference side potential difference Vseg1 and the inner circumference side potential difference Vseg2. In the embodiment, the upper electrode 70 is constant at the common voltage of 0 V, and, for example, the absolute value of the difference between the first potential difference and the second potential difference as the outer circumference side potential difference Vseg1 is equivalent to the amount of voltage change ΔVO1 between the first segment voltage VO1 and the second segment voltage VO2 applied to the first segment electrode 62 as shown in Fig. 13. There is a relationship with respect to the amount of voltage change of the outer circumference side potential difference Vseg1 to be sequentially smaller as ΔVO1 > ΔVO2 > ΔVO3 > ΔVO4, and there is also a relationship with respect to the amount of voltage change of the inner circumference side potential difference Vseg2 to be sequentially smaller as ΔVI1 > ΔVI2 > ΔVI3.

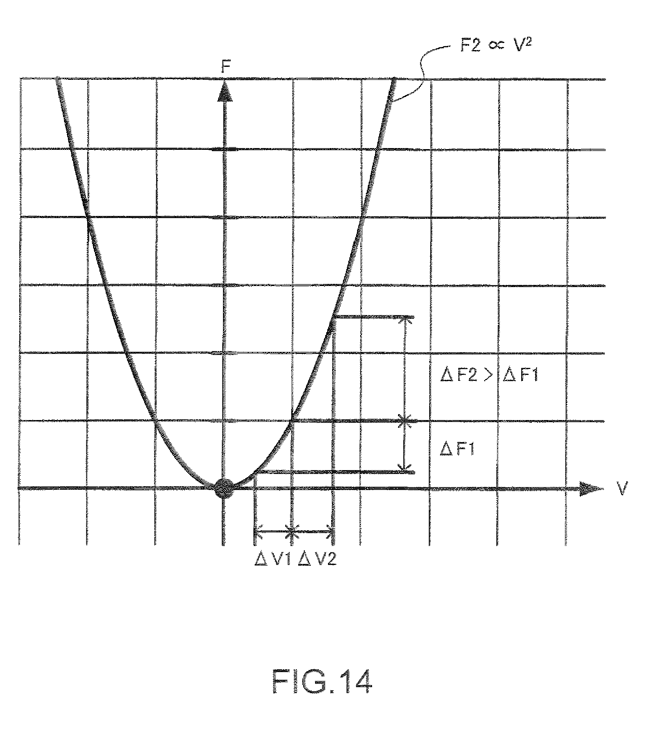

The reason for the relationships is as follows. From the above described equation (1), the electrostatic attractive force F is proportional to the square of the potential difference between the lower and the upper electrodes 60, 70 (in the embodiment, the applied voltage V to the lower electrode 60). Fig. 14 is a characteristic graph of the electrostatic attractive force F proportional to the square of the potential difference V (a graph of F = V²) . As shown in Fig. 14, if the potential difference V is switched to be larger to the first potential difference, the second potential difference, the third potential difference, in the case where the absolute value ΔV1 of the difference between the first potential difference and the second potential difference and the absolute value ΔV2 of the difference between the second potential difference and the third potential difference are the same (ΔV1 = ΔV2 in Fig. 14), the amount of increase of the electrostatic attractive force ΔF sharply increases from ΔF1 to ΔF2 and causes overshoot.

Accordingly, the absolute value ΔV2 of the difference between the second potential difference and the third potential difference is made smaller than the absolute value ΔV1 of the difference between the first potential difference and the second potential difference. Thereby, the sharp increase of the electrostatic attractive force when the gap becomes narrower may be suppressed, and overshoots in Tables NOS. 1 to 4 and NOS. 6 to 8 in Fig. 13 may further be suppressed, and the more rapid wavelength-tunable operation may be realized.

On the other hand, in Table NO. 5 or NO. 9 in Fig. 13, the sharp increase of the electrostatic attractive force when the gap becomes narrower is permitted instead and the contacts between the pairs of first and second opposed electrodes 80, 90 are positively utilized.

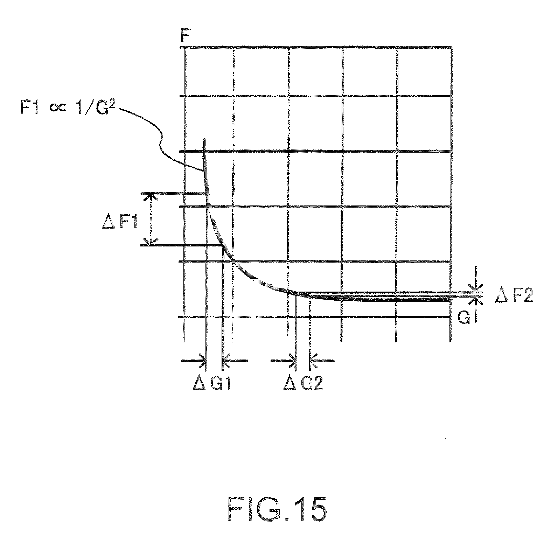

As expressed in the equation (1), the electrostatic attractive force F is inversely proportional to the square of the gap G (first and second gaps G1, G2) between the lower and upper electrodes 60, 70. Fig. 15 shows a relationship between the amount of change ΔF of the electrostatic attractive force F and the amount of change ΔG of the gap G between the lower and upper electrodes 60, 70. In Fig. 15, an amount of gap change ΔG1 in the region where the gap between electrodes G is smaller and an amount of gap change ΔG2 (= ΔG1) in the region where the gap between electrodes G is larger are shown. In the region where the gap between electrodes G is smaller, the gap changes only by the amount of gap change ΔG1, and the electrostatic attractive force F largely changes by ΔF1. On the other hand, in the region where the gap between electrodes G is larger, even when the gap changes by the amount of gap change ΔG2 equal to the amount of gap change ΔG1, the amount of change of the electrostatic attractive force F becomes relatively as small as ΔF2.

As described above, in the region where the gap between electrodes G is relatively narrow, the electrostatic attractive force F drastically changes only when the gap G slightly changes, and gap control for obtaining the predetermined electrostatic attractive force F is extremely difficult. Accordingly, in Table NO. 5 or NO. 9 in Fig. 13, the sharp increase of the electrostatic attractive force when the gap becomes narrower is permitted instead and the pair of first and second opposed electrodes 80, 90 are brought into contact.

### 1.2.4.2. Voltage Application Periods

Regarding the respective outer circumference side potential difference Vseg1 and the inner circumference side potential difference Vseg2, the potential difference control unit 110 may make periods in which they are set to the second potential difference longer than periods in which they are set to the first potential difference and periods in which they are set to the third potential difference longer than the periods in which they are set to the second potential difference. In the embodiment, as shown in Fig. 13, regarding the outer circumference side potential difference Vseg1, the period TO2 of the second potential difference VO2 is longer than the period TO1 of the first potential difference VO1 and the period TO3 of the third potential difference VO3 is longer than the period TO2 of the second potential difference VO2, and there is a relationship to be sequentially longer as TO1 < TO2 < TO3 < TO4. Similarly, as shown in Fig. 13, regarding the inner circumference side potential difference Vseg2, the period T12 of the second potential difference VI2 is longer than the period TI1 of the first potential difference VI1 and the period TI3 of the third potential difference VI3 is longer than the period TI2 of the second potential difference VI2, and there is a relationship to be sequentially longer as TI1 < TI2 < TI3.

When the potential difference is set to the second potential difference larger than the first potential difference, or set to the third potential difference larger than the second potential difference, also the resilience of the second substrate 30 becomes larger. Accordingly, the time until the second substrate 30 becomes still is longer. That is, the time until the third gap G3 between the first and second reflecting films 40, 50 becomes stable in a fixed position is longer. On the other hand, in the embodiment, by setting the period in which they are set to the second potential difference longer than the period in which they are set to the first potential difference and the period in which they are set to the third potential difference longer than the period in which they are set to the second potential difference as in the embodiment, the third gap G3 may be stabilized to a predetermined value.

Note that the drive period TO5 in which the pair of first opposed electrodes 80 are in contact and the drive period TI4 in which the pair of second opposed electrodes 90 are in contact may be made shorter than the respective periods TO1 to TO4 and TI1 to TI3 because the second substrate 30 instantly becomes stable in the contact position.

### 1.2.5. Yet Another Driving Method of Light Filter

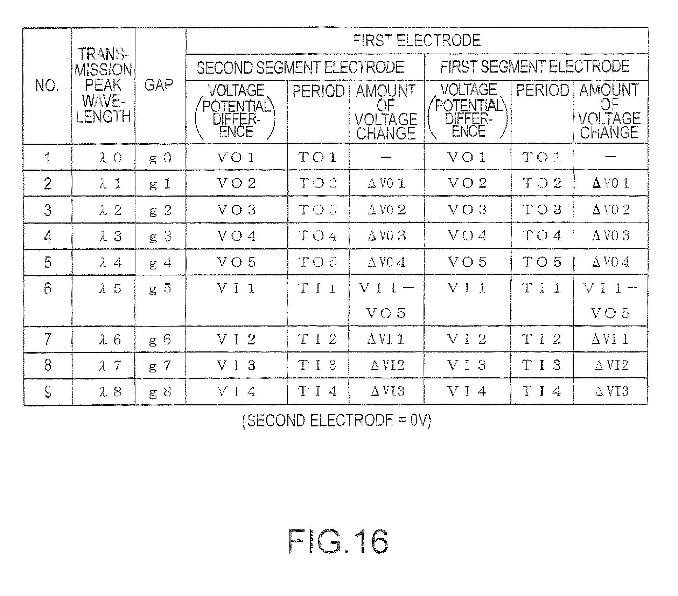

Fig. 16 shows voltage table data for varying the gap between the first and second reflecting films 40, 50 at N = 9 levels by applying common voltages to the respective K segment electrodes 62, 64. That is, the relationship between Figs. 10 and 12 is equivalent to the relationship between Figs. 15 and 16.

Also, in Fig. 16, in Tables NO. 1 to NO. 4, the size of the first gap G1 between the pair of first opposed electrodes 80 sequentially becomes smaller, and, when the common voltage VO5 is applied to the first and second segment electrodes 62, 64 in Table NO. 5, the pair of first opposed electrodes 80 are brought into contact as shown in Fig. 2. Further, in Tables NO. 5 to NO. 8, the size of the second gap G2 between the pair of second opposed electrodes 90 sequentially becomes smaller, and, when the maximum common voltage VI4 is applied to the first and second segment electrodes 62, 64 in Table NO. 9, the pair of second opposed electrodes 90 may be brought into contact as shown in Fig. 3. Therefore, the same effect may be exerted by the driving method in Fig. 16 as that of the driving method in Fig. 13, however, since VO5 < VI1, the noise sensitivity becomes larger than in the driving method in Fig. 13 because the maximum voltage Vmax is segmented into N = 9 and the respective application voltages are set.

### 2. Analytical Instrument

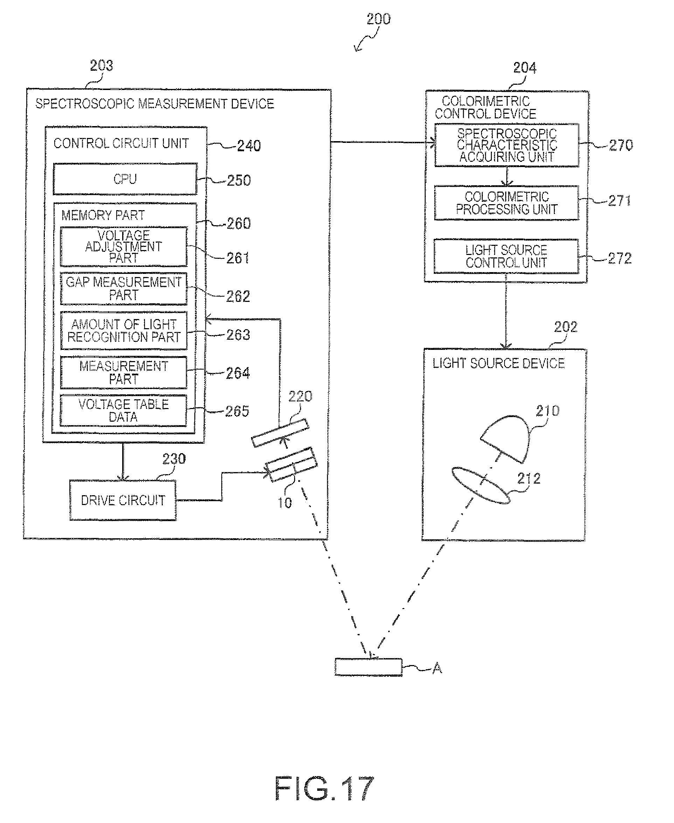

Fig. 17 is a block diagram showing a schematic configuration of a colorimeter as an example of an analytical instrument of one embodiment according to the invention.

In Fig. 17, a colorimeter 200 includes a light source device 202, a spectroscopic measurement device 203, and a colorimetric control device 204. The colorimeter 200 outputs white light, for example, from the light source device 202 toward a test object A, and allows test object light as light reflected by the test object A to enter the spectroscopic measurement device 203. Then, the test object light is spectroscopically separated in the spectroscopic measurement device 203, and spectroscopic characteristic measurement for measuring the amounts of spectroscopically separated lights having the respective wavelengths is performed. In other words, the test object light as light reflected by the test object A is allowed to enter a light filter (etalon) 10, and spectroscopic characteristic measurement for measuring the amounts of lights transmitted through the etalon 10 is performed. Further, the colorimetric control device 204 analyzes colorimetric processing of the test object A, that is, the degrees of colors of wavelengths contained in the test object A based on the obtained spectroscopic characteristics.

The light source device 202 includes a light source 210 and plural lenses 212 (only one is shown in Fig. 1), and outputs white light to the test object A. Further, the plural lenses 212 include a collimator lens, and the light source device 202 makes the white light output from the light source 210 into parallel light using the collimator lens and outputs it to the test object A from a projection lens (not shown).

The spectroscopic measurement device 203 includes the etalon 10, a light receiving unit 220 as a light receiving device, a drive circuit 230, and a control circuit unit 240 as shown in Fig. 17. Further, the spectroscopic measurement device 203 includes an incident optical lens (not shown) that guides the reflected light reflected by the test object A (measurement object light) in the position facing the etalon 10 inside.

The light receiving unit 220 includes plural photoelectric conversion elements (light receiving elements) and generates electric signals in response to the amounts of received light. Further, the light receiving unit 220 is connected to the control circuit unit 240 and outputs the generated electric signals as light reception signals to the control circuit unit 240.

The drive circuit 230 is connected to the lower electrode 60, the upper electrode 70, and the control circuit unit 240 of the etalon 10. The drive circuit 230 applies a drive voltage between the lower electrode 60 and the upper electrode 70 based on a drive control signal input from the control circuit unit 240 to move the second substrate 30 to a predetermined displacement position. As long as the drive voltage is applied between the lower electrode 60 and the upper electrode 70 so that a desired potential difference may be produced, for example, a predetermined voltage may be applied to the lower electrode 60 and the upper electrode 70 may be set at the ground potential. It is preferable to use a direct-current voltage as the drive voltage.

The control circuit unit 240 controls the entire operation of the spectroscopic measurement device 203. As shown in Fig. 17, the control circuit unit 240 includes, for example, a CPU 250, a memory part 260, etc. Further, the CPU 250 performs spectroscopic measurement processing based on various kinds of programs, various kinds of data stored in the memory part 260. The memory part 260 includes a recording medium such as a memory or a hard disc, for example, and appropriately and readably stores the various kinds of programs, various kinds of data.

Here, in the memory part 260, as programs, a voltage adjustment part 261, a gap measurement part 262, an amount of light recognition part 263, and a measurement part 264 are stored. The gap measurement part 262 may be omitted as described above.

Further, in the memory part 260, voltage table data 265 shown in one of Fig. 10, 12, 13, or 16 in which the voltage values to be applied to electrostatic actuators 80, 90 for adjustment of the distance of the third gap G3 and the times in which the voltage values are applied are correlated are stored.

The colorimetric control device 204 is connected to the spectroscopic measurement device 203 and the light source device 202, and performs control of the light source device 202 and colorimetric processing based on the spectroscopic characteristics acquired by the spectroscopic measurement device 203. As the colorimetric control device 204, for example, a general-purpose personal computer, a portable information terminal, or a computer exclusive for colorimetry may be used.

Further, as shown in Fig. 17, the colorimetric control device 204 includes a light source control unit 272, a spectroscopic characteristic acquiring unit 270, a colorimetric processing unit 271, etc.

The light source control unit 272 is connected to the light source device 202. Further, the light source control unit 272 outputs a predetermined control signal to the light source device 202 based on setting input of a user, for example, and allows white light with predetermined brightness to be output from the light source device 202.

The spectroscopic characteristic acquiring unit 270 is connected to the spectroscopic measurement device 203, and acquires spectroscopic characteristics input from the spectroscopic measurement device 203.

The colorimetric processing unit 271 performs colorimetric processing of measuring chromaticity of the test object A based on the spectroscopic characteristics. For example, the colorimetric processing unit 271 performs processing of graphically representing the spectroscopic characteristics obtained from the spectroscopic measurement device 203 and outputting it to an output device (not shown) such as a printer or display, etc.

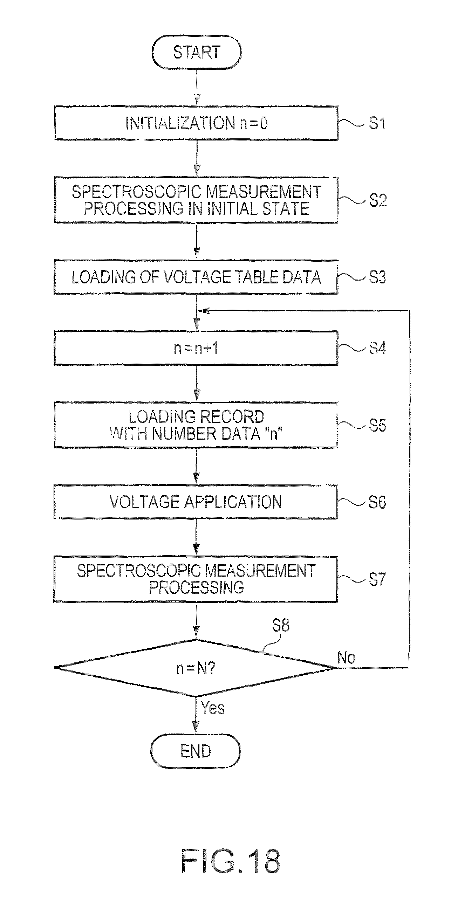

Fig. 18 is a flowchart showing a spectroscopic measurement operation of the spectroscopic measurement device 203. First, the CPU 250 of the control circuit unit 240 activates the voltage adjustment part 261, the amount of light recognition part 263, and the measurement part 264. Further, the CPU 250 initializes a variable number of measurements n (sets the number to n = 0) as an initial state (step S1). The variable number of measurements n takes an integer number equal to or more than zero.

Then, the measurement part 264 measures amounts of lights transmitted through the etalon 10 in the initial state, that is, in the state in which no voltage is applied to the electrostatic actuators 80, 90 (step S2). Note that the size of the third gap G3 in the initial state may be measured at manufacturing the spectroscopic measurement device in advance, for example, and stored in the memory part 260. Further, the amount of transmitted lights in the initial state obtained here and the size of the third gap G3 are output to the colorimetric control device 204.

Then, the voltage adjustment part 261 loads the voltage table data 265 stored in the memory part 260 (step S3). Further, the voltage adjustment part 261 adds "1" to the variable number of measurements n (step S4).

Then, the voltage adjustment part 261 acquires voltage data and voltage application period data of the first and second segment electrodes 62, 64 corresponding to the variable number of measurements n (step S5) from the voltage table data 265. Then, the voltage adjustment part 261 outputs the drive control signal to the drive circuit 230, and performs processing of driving the electrostatic actuators 80, 90 according to the data of the voltage table data 265 (step S6).

Further, the measurement part 264 performs spectroscopic measurement processing at times after a lapse of the application times (step S7). That is, the measurement part 264 allows the amount of light recognition part 263 to measure the amounts of transmitted lights. Furthermore, the measurement part 264 performs control of outputting spectroscopic measurement results in which the measured amounts of transmitted lights and the wavelengths of the transmitted lights are correlated to the colorimetric control device 204. Note that data of amounts of lights of plural or all times are stored in the memory part 260 in advance and the data of amounts of lights with respect to plural times or all data of amounts of lights are acquired, and then, the measurement of amounts of lights may be performed by measuring the respective amounts of lights at a time.

Then, the CPU 250 determines whether the variable number of measurements n reaches the maximum value N or not (step S8), and if the CPU determines that the number of measurements n is N, ends a series of spectroscopic measurement operation. On the other hand, if the number of measurements n is less than N at step S8, the process returns to step S4, the processing of adding "1" to the number of measurements n is performed, and the processing at steps S5 to S8 is repeated.

### 3. Optical Equipment

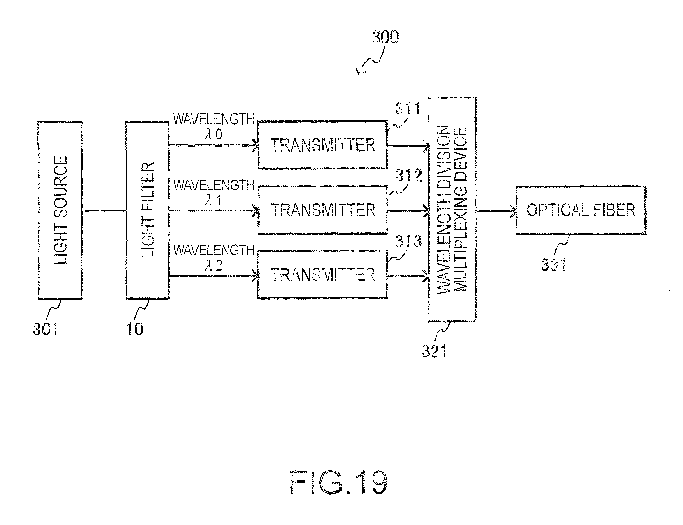

Fig. 19 is a block diagram showing a schematic configuration of transmission equipment of a wavelength division multiplexing communication system as an example of optical equipment of one embodiment according to the invention. In wavelength division multiplexing (WDM) communication, if plural light signals having different wavelengths are multiply used in one optical fiber utilizing characteristics that signals having different wavelengths do not interfere with one another, the transmission quantity of data may be improved without increasing the optical fiber lines.

In Fig. 19, wavelength division multiplexing transmission equipment 300 has a light filter 10 to which light from a light source 301 is input, and lights having plural wavelengths λ0, λ1, λ2,... are transmitted through the light filter 10. Transmitters 311, 312, 313 are provided with respect to each wavelength. The light pulse signals for the plural channels from the transmitters 311, 312, 313 are combined into one in a wavelength division multiplexing device 321 and sent out to one optical fiber transmission path 331.

The invention may similarly be applied to optical code division multiplexing (OCDM) transmission equipment. This is because the OCDM identifies the channels by pattern matching of the coded light pulse signals, however, the light pulses forming the light pulse signals contain light components of different wavelengths.

As described above, some embodiments have been explained, however, persons skilled in the art could easily understand that many modifications may be made substantially without departing from the new matter and effects of the invention. Therefore, all of the modified examples fall within the scope of the invention. For example, in the specifications and drawings, terms described with terms in broader senses or synonyms at least at once may be replaced by the different terms in any part of the specifications or drawings.

## Claims

1. A light filter comprising:
a first substrate;
a second substrate opposed to the first substrate;
a first reflecting film provided on the first substrate;
a second reflecting film provided on the second substrate and opposed to the first reflecting film;
a first electrode provided on the first substrate and provided around the first reflecting film in a plan view;
a second electrode provided on the first substrate and provided between the first electrode and the first reflecting film in the plan view;
a third electrode provided on the second substrate and opposed to the first electrode;
a fourth electrode provided on the second substrate and opposed to the second electrode; and
a potential difference control unit that controls a potential difference between the first electrode and the third electrode and a potential difference between the second electrode and the fourth electrode,
wherein the first electrode and the third electrode are opposed at a first distance,
the second electrode and the fourth electrode are opposed at a second distance different from the first distance, and
the potential difference control unit brings the first electrode and the third electrode into contact by producing the potential difference between the first electrode and the third electrode and brings the second electrode and the fourth electrode into contact by producing the potential difference between the second electrode and the fourth electrode.

2. The light filter according to claim 1, wherein the potential difference control unit brings the second electrode and the fourth electrode into contact after bringing the first electrode and the third electrode into contact.

3. The light filter according to claim 2, wherein the potential difference control unit brings the first electrode and the third electrode into contact by setting the potential difference between the first electrode and the third electrode to a first potential difference, and then, setting the potential difference between the first electrode and the third electrode to a potential difference larger than the first potential difference.

4. The light filter according to claim 2, wherein the potential difference control unit brings the second electrode and the fourth electrode into contact by setting the potential difference between the second electrode and the fourth electrode to a second potential difference, and then, setting the potential difference between the second electrode and the fourth electrode to a potential difference larger than the second potential difference.

5. A light filter comprising:
a first reflecting film that reflects lights and may transmit a light having a specific wavelength;
a second reflecting film that is provided to be opposed to the first reflecting film with a gap in between, and reflects lights and may transmit a light having a specific wavelength;
a first electrode provided around the first reflecting film;
a second electrode provided between the first electrode and the first reflecting film;
a third electrode provided to be opposed to the first electrode;
a fourth electrode provided to be opposed to the second electrode; and
a potential difference control unit that controls a potential difference between the first electrode and the third electrode and a potential difference between the second electrode and the fourth electrode,
wherein the first electrode and the third electrode are opposed at a first distance,
the second electrode and the fourth electrode are opposed at a second distance different from the first distance, and
the potential difference control unit brings the first electrode and the third electrode into contact by producing the potential difference between the first electrode and the third electrode to reduce the first distance and brings the second electrode and the fourth electrode into contact by producing the potential difference between the second electrode and the fourth electrode to reduce the second distance.

6. A light filter comprising:
a first substrate;
a second substrate opposed to the first substrate;
a first reflecting film provided on the first substrate;
a second reflecting film provided on the second substrate and opposed to the first reflecting film;
a first electrode provided on the first substrate and provided around the first reflecting film in a plan view;
a second electrode provided on the first substrate and provided between the first electrode and the first reflecting film in the plan view;
a third electrode provided on the second substrate and opposed to the first electrode;
a fourth electrode provided on the second substrate and opposed to the second electrode;
a first insulating film provided on the first electrode;
a second insulating film provided on the second electrode; and
a potential difference control unit that controls a potential difference between the first electrode and the third electrode and a potential difference between the second electrode and the fourth electrode,
wherein the first electrode and the third electrode are opposed at a first distance,
the second electrode and the fourth electrode are opposed at a second distance different from the first distance, and
the potential difference control unit brings the first insulating film and the third electrode into contact by producing the potential difference between the first electrode and the third electrode and brings the second insulating film and the fourth electrode into contact by producing the potential difference between the second electrode and the fourth electrode.

7. The light filter according to claim 6, wherein the potential difference control unit brings the second insulating film and the fourth electrode into contact after bringing the first insulating film and the third electrode into contact.

8. The light filter according to claim 7, wherein the potential difference control unit brings the first insulating film and the third electrode into contact by setting the potential difference between the first electrode and the third electrode to a first potential difference, and then, setting the potential difference between the first electrode and the third electrode to a potential difference larger than the first potential difference.

9. The light filter according to claim 7, wherein the potential difference control unit brings the second insulating film and the fourth electrode into contact by setting the potential difference between the second electrode and the fourth electrode to a second potential difference, and then, setting the potential difference between the second electrode and the fourth electrode to a potential difference larger than the second potential difference.

10. A light filter comprising:
a first substrate;
a second substrate opposed to the first substrate;
a first reflecting film provided on the first substrate;
a second reflecting film provided on the second substrate and opposed to the first reflecting film;
a first electrode provided on the first substrate and provided around the first reflecting film in a plan view;
a second electrode provided on the first substrate and provided between the first electrode and the first reflecting film in the plan view;
a third electrode provided on the second substrate and opposed to the first electrode;
a fourth electrode provided on the second substrate and opposed to the second electrode;
a first insulating film provided on the first electrode;
a second insulating film provided on the second electrode;
a third insulating film provided on the third electrode;
a fourth insulating film provided on the fourth electrode; and
a potential difference control unit that controls a potential difference between the first electrode and the third electrode and a potential difference between the second electrode and the fourth electrode,
wherein the first electrode and the third electrode are opposed at a first distance,
the second electrode and the fourth electrode are opposed at a second distance different from the first distance, and
the potential difference control unit brings the first insulating film and the third insulating film into contact by producing the potential difference between the first electrode and the third electrode and brings the second insulating film and the fourth insulating film into contact by producing the potential difference between the second electrode and the fourth electrode.

11. The light filter according to claim 10, wherein the potential difference control unit brings the second insulating film and the fourth insulating film into contact after bringing the first insulating film and the third insulating film into contact.

12. The light filter according to claim 11, wherein the potential difference control unit brings the first insulating film and the third insulating film into contact by setting the potential difference between the first electrode and the third electrode to a first potential difference, and then, setting the potential difference between the first electrode and the third electrode to a potential difference larger than the first potential difference.

13. The light filter according to claim 11, wherein the potential difference control unit brings the second insulating film and the fourth insulating film into contact by setting the potential difference between the second electrode and the fourth electrode to a second potential difference, and then, setting the potential difference between the second electrode and the fourth electrode to a potential difference larger than the second potential difference.

14. The light filter according to claim 1, wherein the first distance is a distance when the potential difference between the first electrode and the third electrode is zero, and the second distance is a distance when the potential difference between the second electrode and the fourth electrode is zero.

15. The light filter according to claim 1, wherein, given that a surface of the first electrode at a second substrate side is a first surface, a surface of the second electrode at the second substrate side is a second surface, a surface of the third electrode at a first substrate side is a third surface, and a surface of the fourth electrode at the first substrate side is a fourth surface,
the first distance is a distance from the first surface to the third surface in a perpendicular direction of the first surface, and
the second distance is a distance from the second surface to the fourth surface in a perpendicular direction of the second surface.

16. The light filter according to claim 1, wherein, when the potential difference between the first electrode and the third electrode is zero and the potential difference between the second electrode and the fourth electrode is zero, the first reflecting film and the second reflecting film are opposed at a third distance,
the first distance is smaller than the second distance, and
the second distance is smaller than the third distance.

17. The light filter according to claim 16, wherein, given that a surface of the first reflecting film at the second substrate side is a first reflecting film surface, and a surface of the second reflecting film at the first substrate side is a second reflecting film surface,
the third distance is a distance from the first reflecting film surface to the second reflecting film surface in a perpendicular direction of the first reflecting film surface.

18. The light filter according to claim 1, wherein the first substrate has a first surface, a second surface higher than the first surface, and a third surface higher than the second surface at the second substrate side,
the first reflecting film is formed on the first surface,
the second electrode is formed on the second surface, and
the first electrode is formed on the third surface.

19. The light filter according to claim 1, wherein the first substrate has a first surface, a second surface having the same height as that of the first surface, and a third surface having the same height as that of the second surface at the second substrate side,
the first reflecting film is formed on the first surface,
the second electrode is formed on the second surface, the first electrode is formed on the third surface, and
a thickness of the first electrode is different from a thickness of the second electrode.

20. The light filter according to claim 1, further comprising an extraction wire connected to a first electrode,
wherein the first electrode has a first ring shape in the plan view, the second electrode has a second ring shape with a slit in the plan view, the third electrode has a third ring shape in the plan view,
the fourth electrode has a fourth ring shape with a slit in the plan view, the extraction wire connected to the first electrode is formed in a region in which the slit of the second ring shape is formed, and
the slit of the fourth ring shape is formed above the slit of the second ring shape.

21. The light filter according to claim 1, wherein the first electrode and the second electrode are formed apart, and
the third electrode and the fourth electrode are electrically connected via a connecting part.

22. An analytical instrument comprising the light filter according to claim 1.

23. Optical equipment comprising the light filter according to claim 1.
